(19) Europäisches Patentamt
European Patent Office
Office européen des brevets

(11) Publication number: **0 284 341 B1**

(12) **EUROPEAN PATENT SPECIFICATION**

(45) Date of publication of patent specification: **17.06.92** (51) Int. Cl.[5]: **C02F 1/04**

(21) Application number: **88302493.7**

(22) Date of filing: **22.03.88**

(54) **Method for treating photographic process waste liquor throough concentration by evaporation.**

(30) Priority: **24.03.87 JP 69435/87**
**24.03.87 JP 69437/87**

(43) Date of publication of application:
**28.09.88 Bulletin 88/39**

(45) Publication of the grant of the patent:
**17.06.92 Bulletin 92/25**

(84) Designated Contracting States:
**DE FR GB IT NL**

(56) References cited:
**EP-A- 0 223 605**
**DE-A- 2 427 651**
**US-A- 3 995 298**
**US-A- 4 640 769**

**PATENT ABSTRACTS OF JAPAN, vol. 12, no. 32 (P-661)(2879), 30th January 1988, page 109 P 661; & JP-A-62 184 459 (KONISHIROKU PHOTO IND. CO., LTD) 12-08-1987**

**J.C.P. Cheu, Cane Sugar Handbook, Chapter 9.13, Evaporator Instrumentation Control Systems, pages 233-236, publisher John Wiley & Sons, 1985.**

(73) Proprietor: **KONICA CORPORATION**
**26-2, Nishishinjuku 1-chome, Shinjuku-ku**
**Tokyo 160(JP)**

(72) Inventor: **Kurematsu, Masayuki**
**c/o Konica Corporation 1, Sakura-machi**
**Hino-shi Tokyo(JP)**
Inventor: **Kobayashi, Kazuhiro**
**c/o Konica Corporation 1, Sakura-machi**
**Hino-shi Tokyo(JP)**
Inventor: **Koboshi, Shigeharu**
**c/o Konica Corporation 1, Sakura-machi**
**Hino-shi Tokyo(JP)**
Inventor: **Goto, Nobutaka**
**c/o Konica Corporation 1, Sakura-machi**
**Hino-shi Tokyo(JP)**
Inventor: **Takabayashi, Naoki**
**c/o Konica Corporation 1, Sakura-machi**
**Hino-shi Tokyo(JP)**

(74) Representative: **Ellis-Jones, Patrick George Armine et al**
**J.A. KEMP & CO. 14 South Square Gray's Inn**
**London WC1R 5EU(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 284 341 B1

VAN DER GRINTEN, Procesregelingen, chapter 3.5.1, Regeling van Scheiders en indampers, pages 123-125 , publisher Spectrum 1970

PATENT ABSTRACTS OF JAPAN, vol. 12, no. 32 (P-661)(2879), 30th January 1988, page 109 P661; & JP-A-62 184 459 (KONISHIROKU PHOTO IND. CO., LTD) 12-08-1987

PATENT ABSTRACTS OF JAPAN, vol. 12, no. 32 (P-661)(2879), 30th January 1988, page 109 P 661; & JP-A-62 184 459 (KONISHIROKU PHOTO IND. CO., LTD) 12-08-1987

Van der Grinten, Procesregelingen, chapter 3.5.1, Regeling van Scheiders en indampers, pages 123-125, publisher Spectrum 1970

## Description

This invention relates to a method for concentrating waste liquor produced during development processing of light-sensitive photographic materials in automatic processing machines (hereinafter referred to as "photographic process waste liquor" or "waste liquor") by evaporation. This method can especially be carried out inside the automatic processing machine or in the vicinity thereof.

In general, photographic processing of light-sensitive silver halide photographic materials is carried out in a plurality of steps using processing solutions having one or more functions such as developing, fixing or washing in the case of black and white materials, or color developing, bleach-fixing (or bleaching and fixing), washing or stabilizing in the case of color materials.

During processing of a large quantity of light-sensitive materials, the performance of processing solutions is constantly maintained by removing components that may be thickened or concentrated during the processing by precipitation or evaporation (for example, bromide ions in the developing solution or silver complex salts in the fixing solution) while replenishing components consumed by the processing. A replenishing solution is supplied to the fixing solution for this replenishing, and a part of the processing solution is thrown away to remove the thickened or concentrated components.

In recent years, because of environmental pollution or for economic reasons, replenishing solutions as well as washing water, which is a replenishing solution for washing, are undergoing a change in that the quantity of replenishment has been greatly decreased. The photographic process waste liquor, however, is led from a processing tank of the automatic processing machine through a waste liquor pipe and thrown away, for example in drain, after having been diluted with waste washing water or cooling water for the automatic processing machine.

However, because of tightened regulations in recent years against environmental pollution, although it is possible to throw away washing water or cooling water in drains or rivers, it has been made substantially impossible to throw away photographic processing solutions other than these [for example, developing solutions, fixing solutions, color-developing solutions, bleach-fixing solutions (or bleaching solutions or fixing solutions) or stabilizing solutions]. For this reason, every photographic processing dealer has the waste liquor collected by dealers specialized in waste liquor treatment, or installs pollution-preventive equipment. However, placing the waste liquor in dealers' care necessarily requires considerable space for storing the waste liquor and may also be very expensive. Furthermore pollution-preventive equipment has disadvantages in that it requires a very large initial investment and a large space for installation.

Known methods for pollution-preventive treatment to decrease the burden to environmental pollution include an activated sludge method (e.g. Japanese Patent Publications No. 12943/1976 No. 7952/1976), an evaporation method (e.g. Japanese Unexamined Patent Publications No. 89437/1974, No. 33996/1981), an electrolytic oxidation method (e.g. Japanese Unexamined Patent Publications No. 84462/1973 and No. 119458/1974, Japanese Patent Publications No. 43478/1978, Japanese Unexamined Patent Publications No. 119457/1974), an ion-exchange method (e.g. Japanese Patent Publication No. 37704/1976, Japanese Unexamined Patent Publication No. 383/1978, Japanese Patent Publication No. 43271/1978), a reverse osmosis method (e.g. Japanese Unexamined Patent Publication No. 22463/1975) and a chemical treatment method (e.g. Japanese Unexamined Patent Publications No. 64257/1974, Japanese Patent Publications No. 37396/1982, Japanese Unexamined Patent Publication No. 12152/1978, No. 58833/1974 and No. 63763/1978, Japanese Patent Publication No. 37395/1982). However, these cannot be said to be sufficient.

On the other hand, taking account of the restriction of water resources, increase in cost of water supply and drainage, the simplicity of automatic processing machines and the work environment surrounding the automatic processing machines, there is an increasing recent spread of photographic processing that employs an automatic processing machine requiring no piping outside the automatic processing machine for feeding and discharging water for washing (i.e., the so-called non-washing automatic processing machine). In such processing, it is desired also to dispense with the cooling water which controls the temperature of the processing solutions. Such photographic processing that uses substantially no washing water or cooling water has the feature that, because of no dilution with water, its burden to environmental pollution is very large. The quantity of waste liquor is small as compared with other automatic processing machines.

Accordingly, because of the small quantity of waste liquor, the exterior piping for feeding and discharging solutions can be omitted, which overcomes disadvantages such that the machine can be moved only with difficulty after it has been installed, there is only a narrow space for movement around the machine and the pipework at the time of installment and the energy cost for hot-water feeding pressure are expensive. Thus there is a great advantage in a machine that can be made so compact and so simple that it may be used as an office machine.

However, such waste liquor is a very great burden to environmental pollution, and it is impossible to throw it away even into drains, not to speak of rivers, due to environmental pollution regulations. Moreover, although the waste liquor quantity is small in such photographic processing (i.e. processing in which washing with a large quantity of running water is not used), the waste liquor may still amount to about 10 litres per day, for example, even in relatively small scale color photofinishing laboratories.

Accordingly, in general, the waste liquor is collected by waste liquor collecting dealers, and made harmless after secondary and tertiary treatments. However, because of an increase in the cost for the collection, not only do the fees for taking over the waste liquor increase year by year, but also the dealers are not willing to come to collect waste liquor from miniature photofinishing laboratories because of its low collection efficiency, thus causing a problem that the shops are full of waste liquor.

To solve these problems and to make it possible to treat photographic process waste liquor in miniature photofinishing laboratories, the photographic process waste liquor may be heated to evaporate the water to dryness or to effect solidification as disclosed, for example, in Japanese Utility Model Unexamined Publication No. 70841/1985. The inventors have found that harmful or very ill-smelling gases such as sulfite gas, hydrogen sulfide or ammonia may be generated when the photographic process waste liquor is evaporated. These were found to be generated because ammonium thiosulfate and sulfites (ammonium, sodium or potassium salt) frequently used in the fixing solution or bleach-fixing solution decompose at the high temperature used. Moreover, at the time of the evaporation, the water in the photographic process waste liquor vaporises and increases the volume and pressure in the evaporating vessel. Because of this pressure, the harmful or ill-smelling gases leak outside the evaporation treatment apparatus and cause great difficulties in the work environment.

To solve these problems, Japanese Utility Model Unexamined Publication No. 70841/1985 disclosed a method in which an exhaust gas treating section, for example comprising activated carbon, is provided at an exhaust pipe section of the evaporation apparatus. This method, however, has a serious disadvantage in that vapor from the large quantity of water in the photographic process waste liquor causes sweating or moisture condensation at the exhaust gas treating section, so that the gas absorption treatment agent is covered with water and instantaneously loses its gas absorption ability. Thus, this method has not been put into practical use.

To solve these problems, the present applicants have previously proposed a method of, and an apparatus for, treating photographic process waste liquor, provided with cooling and condensing means capable of condensing the vapor generated by the evaporation and further simultaneously treating the condensate water and uncondensed components to discharge them to the outside.

However, the following problems were found in the above proposal. Specifically, the vapor generated and condensed by the cooling and condensing means may be discharged outside apparatus without being sufficiently condensed if the cooling and condensing efficiency is low. Even if it is treated by activated carbon, ill-smelling harmful gas may still be discharged outside the apparatus. Furthermore, there are instances where the condensate water produced by the condensation smells when thrown away, or has so high a burden to environmental pollution that it cannot be discharged into drains as it is. Still further, when the waste liquor is evaporated, the waste liquor in the evaporation vessel may spout by bumping from a lead-in pipe, which leads the vapor to the cooling and condensing means, and flow into a condensate water stock tank (or reservoir). To prevent an accident due to such bumping, it is necessary to make the volume of the air space of the evaporation vessel very large. Still further, because of very limited space in the miniature photofinishing laboratories, not only is the ill smell generated by the treatment of the photographic processing solutions questioned, but also the space for installing the photographic process waste liquor treatment apparatus itself is questioned. The cost of the apparatus and the running cost also involve important problems. Accordingly, a compact, inexpensive and low-running-cost treatment apparatus that can treat photographic process waste liquor without generating ill-smelling harmful gas is sought.

The present invention firstly seeks to provide a method for concentrating photographic process waste liquor which generates less harmful or ill-smelling components. The present invention secondly seeks to provide a method which involves less bumping at the time of the evaporation treatment. The present invention thirdly seeks to provide a method with good thermal efficiency, good evaporation efficiency, reduced energy cost and which can use compact apparatus. The present invention fourthly seeks to provide a method that can surely feed the waste liquor to be treated.

The present invention provides a method for concentrating photographic process waste liquor by evaporation, which comprises:

heating the liquor in an evaporation vessel with heating means, wherein the heating means provides a heat density of $7.2 \times 10^8$ J/m$^2$ (17.2 kcal/cm$^2$) or less;

adding a compound to the liquor which controls the surface tension of the liquor to $1.9 \times 10^{-2}$ to 6.5 x

$10^{-2}$ N/m (19 to 65 dyne/cm); and

intermittently feeding in the liquor according to a signal from means for detecting the quantity of the liquor in the vessel.

The first to third objects discussed above are achieved by using a heating means having a heat density of 17.2 kcal/$cm^2$ or less.

The first and fourth objects discussed above are achieved by intermittently feeding in the waste liquor according to a signal from means for detecting the quantity of the liquor in the vessel.

Fig. 1 is a schematic illustration of an automatic processing machine;

Fig. 2 is a schematic constitutional illustration showing apparatus which can be used in the method of this invention;

Fig. 3 is a constitutional illustration of the apparatus shown in Fig. 2;

Fig. 4 is a cross-section of the heating means shown in Fig. 2 and Fig. 3;

Fig. 5 to Fig. 8 are illustrations showing various embodiments of the liquid level sensor which can be used in apparatus which can be used in the method of this invention; and

Fig. 9 to Fig. 11 are schematic constitutional illustrations of cooling and condensing means of other examples of apparatus which can be used in this invention.

In this invention, the heat density of the heating means refers to a value obtained by dividing the total heat capacity of the heating means by the area of the heating means which comes into contact with the waste liquor. In this invention the heat density is 17.2 kcal/$cm^2$ or less such that it is possible to suppress the generation of ill-smelling harmful gas and prevent bumping. In other words, if the heat density is more than 17.2 kcal/$cm^2$, the rate of the evaporation of the waste liquor is too high to follow with feeding of the waste liquor to the surface of the heating means, resulting in the formation of a vapor layer on the surface of the heating means. Thus, presumably, the vapor is superheated in the vicinity of the surface of the heating means, which causes the generation of ill smells and bumping.

A gas, for example air, may further be fed into the waste liquor present in the evaporation vessel through a means for feeding the gas, to prevent even more effectively superheating of the vapor as mentioned above. In this invention, the lower limit of the heat density is preferably $4.2 \times 10^5$ J/$m^2$ (0.01 kcal/$cm^2$).

In this invention a compound which controls the surface tension of the photographic process waste liquor to $1.9 \times 10^{-2}$ to $6.5 \times 10^{-2}$ N/m (19 to 65 dyne/cm), preferably $2.0 \times 10^{-2}$ to $6.5 \times 10^{-2}$ N/m (20 to 65 dyne/cm) (hereinafter called "anti-foaming agent") is added to the liquor. By this means it is possible to prevent the accident of the waste liquor blowing off from the lead-in pipe for leading the vapor to the cooling and condensing means.

In a most preferred embodiment of this invention, the heat density of the heating means is about 17.2 kcal/$cm^2$, a gas is fed into the waste liquor present in the evaporation vessel through a means for feeding the gas, and also an anti-foaming agent is fed into the evaporation vessel through a means for feeding the anti-foaming agent, to effectively prevent the generation of ill-smelling gas or harmful gas and the accident of the waste liquor in the evaporation vessel blowing off or spouting because of bumping.

The heating means may comprise a nickrome wire, or complete heaters such as a cartridge heater, a quartz heater, a Teflon heater, a rod heater or a panel heater. It also includes those in which one or a plurality of the heaters mentioned above is set in a high-boiling solvent such as a silicone oil, magnesium carbonate, magnesium oxide or a diatomaceous earth, or those in which these are further embedded in a block of SUS 304 or SUS 316 stainless steel or carbon steel.

The heating means may be provided in the waste liquor in the evaporation vessel, but, in order to enhance the effect of this invention and at the same time prevent a decrease in thermal efficiency or corrosion that may occur when the photographic process waste liquor is burnt and stuck to the surface of the heating means, it is preferable to provide it outside the evaporation vessel and heat the waste liquor in the evaporation vessel through the wall of the evaporation vessel. In this instance, the heat density of the heating means refers to a value obtained by dividing the total heat capacity of the heating means by the area of the heating means which comes into contact with the waste liquor with the interposition of the wall of the evaporation vessel.

When the heating means is provided in the waste liquor in the evaporation vessel, the heating means is preferably such that, for example, an anti-fixing treatment such as a Teflon treatment (for example a fluorine resin coating) is applied on the surface of the heating means to prevent the thermal efficiency from being seriously lowered because of burning or sticking of the photographic process waste liquor on its surface, or corrosion from arising during the concentration process when conducted to dryness.

Means for the Teflon treatment other than the fluorine resin coating may include, for example, those of the binder type, plating type, oil-mixing type, heat treatment type or room temperature wet packing type.

The heating means may be provided at any position, e.g. at an upper part, middle part or lower part of the vessel, so long as the waste liquor in the evaporation vessel can be heated, but, as described in Japanese Unexamined Patent Publication No. 201442/1987 and Japanese Patent Application No. 288328/1986, the heating means is preferably provided such that the upper part of the photographic process waste liquor in the evaporation vessel is heated so as to cause a difference between the temperature of the photographic process waste liquor in the vicinity of the heating means and the temperature at the bottom part of the photographic process waste liquor. In order to enhance the effect of this invention, this temperature difference is 5 ° C or more.

The evaporation vessel may be of any shape, for example a cube, a column, a polygonal pillar including a square pillar, a cone, a polygonal pyramid including a quadrangular pyramid, or a combination of some of these, but preferably has a long longitudinal direction so that the difference between the temperature in the vicinity of the heating means and the temperature of the photographic process waste liquor at the bottom part is greater. More preferably, the space above the surface of the waste liquor in the evaporation vessel is as great as possible to lessen as far as possible the above-mentioned accidental blowing-off or spouting caused by bumping.

The evaporation vessel may be made of any heat-resistant material such as heat-resistant glass, titanium, stainless steel, carbon steel, and inorganic fibers described in "Fukugo Zairyo Gijutsu Syusei (Compilations of Composite Material Techniques)", 1976, published by Sangyo Gijutsu Center, pp.213-219; "Shinzairyo (New Materials) 1984", 1984, published by Toray Research Center, pp.287-315); "Fukugo Zairyo (Composite Materials)", 1984, published by Tokyo University Publishing Society. However, from the viewpoints of safety and corrosion resistance, stainless steel (preferably SUS 304 or SUS 316) and titanium are preferred. The evaporation vessel is preferably subjected to the above-mentioned anti-fixing treatment such as Teflon treatment.

The treatment apparatus preferably has means for feeding a gas into the waste liquor inside the evaporation vessel. The gas may be, for example, air, nitrogen, carbon dioxide, oxygen or freon. For economic reasons and from the viewpoint of safety, air is preferably used.

The means for feeding the gas may be a pressure valve or solenoid valve provided on a cylinder in which the gas is hermetically contained, or when the gas is air, a compressor, air pump or bellows type air pump is preferably used.

In instances in which air is fed into the evaporation vessel by an air pump, the air may be air from inside or outside the treatment apparatus. It may also be air from a waste liquor tank holding the waste liquor. The most preferred embodiment is such that, when the treatment apparatus has means for cooling and condensing the vapor, the air is air from a condensate water tank (a stored liquid tank) holding the condensate water formed by the cooling and condensing means. In this instance, since the ill-smelling or harmful gas contained in the vapor not condensed by the cooling and condensing means can be again brought to the evaporation vessel, it is possible to prevent the ill-smelling or harmful gas from leaking out of the apparatus.

The treatment apparatus has means for feeding into the evaporation vessel a compound which controls the surface tension of the photographic process waste liquor to 19 to 65 dyne/cm. This compound is particularly preferably a compound which controls the surface tension to 2.0 x $10^{-2}$ to 6.5 x $10^{-2}$ N/m (20 to 65 dyne/cm), more preferably 2.5 x $10^{-2}$ to 6.0 x $10^{-2}$ N/m (25 to 60 dyne/cm). This compound is a so-called anti-foaming agent or surface active agent and includes, for example, polyorganosiloxanes and higher alcohols. As the means for feeding this compound into the evaporation vessel, there can be used constant rate pumps or non-constant rate pumps such as a tube pump, a magnetic constant rate pump, a plunger constant rate pump, a bellows pump, a gear pump, a magnet pump, a constant rate magnet pump, a screw pump and a diaphragm pump, but a constant rate pump is preferably used.

The apparatus has means for feeding the photographic process waste liquor into the evaporation vessel, for example the same constant rate pumps or non-constant rate pumps used in the means for feeding the compound which controls the surface tension of the photographic process waste liquor, but constant rate pumps are preferably used.

The means for feeding the compound which controls the surface tension of the photographic process waste liquor is preferably the means for feeding the photographic process waste liquor into the evaporation vessel. In this instance, the compound which controls the surface tension of the photographic process waste liquor is incorporated in the photographic process waste liquor before the waste liquor is fed to the evaporation means.

The photographic process waste liquor which overflows from the automatic processing machine may be directly fed as it is into the evaporation vessel. Here, the means for feeding the photographic process waste liquor into the evaporation vessel merely refers to a lead-in pipe for leading the overflow into the

evaporation vessel. A solenoid valve, for example, may be provided on this lead-in pipe. The photographic process waste liquor which overflows from the automatic processing machine may preferably be stored once in a tank (a waste liquor tank) and then led into the evaporation vessel. However, in instances in which this waste liquor tank is positioned at an upper part of the evaporation vessel, the pump need not necessarily be used as the means for feeding the photographic process waste liquor into the evaporation vessel. Such a means may merely be a lead-in pipe; a solenoid valve may, for example, be provided on the lead-in pipe. When the photographic process waste liquor which overflows from the automatic processing machine is stored once in the waste liquor tank, this waste liquor tank is a tank for storing the overflow from the automatic processing machine (a first overflow tank), and at the same time may be a tank for storing the waste liquor to be fed to the evaporation vessel (a waste liquor feeding tank). Alternatively, the overflow may be stored once in the overflow tank in a given amount and then transferred to the waste liquor feeding tank, but preferably the overflow tank and the feeding tank are the same. In this instance, after the overflow is stored in the waste liquor tank, the waste liquor may be fed into the evaporation vessel, but, alternatively, after the overflow is stored in the waste liquor tank, this waste liquor tank may be provided in the vicinity of or inside the apparatus to use it as the waste liquor feeding tank. The waste liquor feeding tank is preferably provided inside the apparatus as space can be thereby saved. In instances in which the waste liquor feeding tank is provided inside the apparatus, the waste liquor feeding tank is preferably placed on a pedestal capable of being pulled out, as workability can be thereby improved.

The waste liquor feeding tank is preferably provided with a liquid level sensor or means for detecting the weight of the liquid, so constituted so that actuation of the waste liquor feeding means or actuation of the heating means is stopped when the waste liquor in the waste liquor feeding tank runs short.

The means for intermittently feeding the waste liquor according to a signal from a means for detecting the quantity of the waste liquor in said evaporation vessel is described below.

The photographic process waste liquor is preferably fed from the waste liquor feeding tank into the evaporation vessel through the means for feeding the photographic process waste liquor into the evaporation vessel as described above. Intermitent feeding of the waste liquor generates less ill-smelling or harmful gas. The means for detecting the quantity of the waste liquor present in the evaporation vessel is preferably a liquid level sensor, or the feeding of the waste liquor to the evaporation vessel may be controlled by a timer by measuring the evaporation rate in advance. Since, however, the evaporation rate may change as the concentration proceeds or may vary depending on the liquid composition, it is preferred to detect the waste liquor quantity with a liquid level sensor.

The liquid level sensor and the means for feeding the waste liquor into the evaporation vessel are preferably constituted such that they stop the feeding when the liquid level sensor detects the liquid level for a certain time and start the feeding when it does not detect the liquid level for a certain time. Since in the evaporation vessel the liquid level is always changing due to the boiling, frequent switching on and off of the waste liquor feeding means causes trouble, unless such a measure is taken. What is meant by "a certain time" is not less than 1 second and not more than 10 minutes, preferably not less than 1 second and not more than 1 minute; this varies depending on the capacity of the evaporation vessel. In a preferred embodiment, the liquid level sensor is provided in a connecting pipe outside the evaporation vessel. This is preferred because the change of the liquid level due to the boiling can be small. In this instance, the feeding of the waste liquor may be stopped when the liquid level sensor detects the liquid level for a certain time and may be started when it does not detect the liquid level for a certain time as described above.

The apparatus preferably has means for cooling and condensing the vapor formed by evaporation. All sorts of heat exchanging means can be employed, for example:

(1) a shell and tube type (or multi-tube type, thimble type);
(2) a double tube type;
(3) a coil type;
(4) a helical type;
(5) a plate type;
(6) a fin tube type;
(7) a trombone type; and
(8) an air cooling type.

Heat exchange type reboilers may also be used, for example:

(1) a vertical thermosiphon type;
(2) a horizontal thermosiphon type;
(3) an overflow type (kettle type);
(4) a forced circulation type; and
(5) an interpolation type.

Condenser type heat exchangers may further be employed, for example:

(1) a direct condenser type;

(2) a built-in-column type;

(3) a built-on-top column type; and

(4) a separate type.

It is also possible to use any type of cooler.

Air cooling type heat exchangers may be used advantageously, for example:

(1) a forced draft type; and

(2) a blowing draft type.

In a preferred embodiment the cooling and condensing means is constituted as a heat dissipation device provided with a heat dissipation plate (or an air-cooling fan) on a vapor discharge pipe for discharging the vapor formed by evaporation, with a means for feeding water on this heat dissipation plate. In this instance, the water is preferably fed on the heat dissipation plate in a shower from an upper part of a device comprising the heat dissipation plate. The water may be fed, for example, from a city water cock on the heat dissipation plate through a valve or solenoid valve if necessary. In this instance, the means for feeding water refers to, for example, the cock, a water feeding pipe, a valve or a solenoid valve. However, it is preferred to use stored water, which is preferably fed on the heat dissipation plate through a water-feeding means including constant rate pumps (for example, a tube pump, a magnetic constant rate pump, a plunger constant rate pump, a bellows pump, a gear pump, a magnet pump, a constant rate magnet pump, a screw pump or a diaphragm pump) or non-constant rate pumps as described above. It is particularly preferred to constitute the means so that the stored water is circulated in such a manner that the water in a stored water tank provided at a lower part of the heat dissipation plate device is fed in a shower form on the heat dissipation plate through a pump and again stored in the stored water tank at the lower part. In this instance, it is desired that a liquid level sensor is provided in the stored water tank so that lack of stored water can be detected by sending a signal when the liquid level becomes lower than a given level, and the water is replenished.

The cooling and condensing means are preferably constituted as the heat dissipation plate device provided with the heat dissipation plate (or air cooling fan) on the vapor discharge pipe for discharging the vapor formed by evaporation. When there is provided means for feeding water on this heat dissipation plate, it is preferably simultaneously provided with an air cooling fan. However, in this instance, it is particularly preferred that the air cooling fan is provided such that the air can be discharged outside the treatment apparatus through the heat dissipation plate device, as it is thereby possible to prevent condensation from occurring in electric equipment sections in the apparatus.

The condensate water obtained by cooling and condensing the vapor formed by evaporation is stored in a tank for storing the condensate water (i.e., a stored liquid tank). This stored liquid tank is preferably inside the treatment apparatus as space can be thereby saved. In this instance the stored liquid tank is more preferably placed on a pedestal capable of being pulled out to improve workability.

The apparatus preferably has means for feeding an alkali agent to the evaporation vessel. This prevents the generation of ill-smelling or harmful gas by preventing sulfation of the waste liquor that may occur because of lowering of the pH of the waste liquor in the evaporation vessel.

The alkali agent includes hydroxides of alkali metals or alkaline earth metals such as sodium hydroxide, potassium hydroxide and calcium hydroxide, carbonates, silicates, phosphates and foliates. The alkali agent may be fed to the evaporation vessel from a stock tank for an aqueous alkali agent solution obtained by dissolving the alkali agent in water, through a constant rate pump or non-constant rate pump of the types described above.

However, it is preferred that the alkali agent is added in advance to the waste liquor in a waste liquor feeding tank and then fed into the evaporation vessel through the means for feeding the waste liquor. Here, the means for feeding the alkali agent serves also as the waste liquor feeding means.

The treatment apparatus preferably has means for cooling and condensing the vapor formed by evaporation, as the ill-smelling or harmful gas can be thereby prevented from being generated. However, regarding the condensate water thus obtained, care should be taken that (1) at least one secondary treatment selected from the following (A) to (J) is preferably applied to the condensate water; (A) Adsorptive material treatment, for example activated carbon treatment, (B) ultraviolet exposure treatment, (C) reverse osmosis treatment, (D) oxidizing agent treatment, (E) electrolytic oxidation treatment, (F) aeration treatment, (G) electrodialysis treatment, (H) redistillation treatment, (I) ion exchange resin treatment and (J) pH adjustment, and (2) the condensate water is preferably used as dissolving water for photographic processing solutions.

The activated carbon may be any activated carbon that is adsorptive to at least of benzyl alcohol,

ammonium compounds and sulfur compounds.

It is possible to use any activated carbon regardless of what its constitution is and how activated it is, or any of powdery or granular activated carbon, preferably granular activated carbon, and particularly preferably coconut shell activated carbon and activated carbon having a molecular sieve ability. The activated carbon having a molecular sieve ability refers to one having slit-shaped pores, which pores are desirably from 6 Å to 15 Å in width. Such an activated carbon is described in Japanese Unexamined Patent Publication No. 14831/1983.

Adsorptive materials can be used, in addition to the above activated carbon, such as:

(1) clay materials;
(2) polyamide type polymeric compounds;
(3) polyurethane type polymeric compounds;
(4) phenol resin;
(5) epoxy resin;
(6) polymeric compounds having a hydrazide group;
(7) polymeric compounds having a polytetrafluoroethylene group;
(8) mono- or polyhydric alcohol methacrylic acid monoester-polyhydric alcohol methacrylic acid; and
(9) polyester copolymers.

Details of these materials are given in Japanese Unexamined Patent Publication No. 4051/1986 (in particular, pages 62 to 66).

For ultraviolet exposure of the condensate water there can be used, for example, an ultraviolet exposure device or a halogen lamp; there is no particular limitation. Known ultraviolet exposure devices are those having an output of from 5 W to 1 kW, but use is by no means limited to these. Also, electromagnetic waves and light having a wavelength outside the range of 190 nm to 400 nm are emitted from an ultraviolet lamp, to which the condensate water obtained from the photographic process waste liquor may be exposed. Infrared rays may also be used in combination.

The ultraviolet lamp used may be of the double tube type.

The ultraviolet exposure is carried out on the condensate water obtained from the photographic process waste liquor with ultraviolet rays using, for example, an ultraviolet lamp. The ultraviolet exposure may be carried out in a continuous or intermittent manner.

In the reverse osmosis treatment, it is possible to use all kinds of reverse osmotic membranes, or desalting and concentrating methods and devices using reverse osmotic membranes. Preferred reverse osmotic membranes are cellulose acetate, aromatic polyamide, polyvinyl alcohol and polysulfone, and particularly preferably, cellulose acetate.

The reverse osmosis apparatus is preferably driven under a pressure of 40 $kg/cm^2$ to 55 $kg/cm^2$ in view of the separation performance and treatment ability characteristics.

The oxidizing agent used in the oxidizing agent treatment includes oxides of metals or nonmetals, oxide oxygen acids or salts thereof, peroxides and compounds containing organic oxygen. The oxides include nitrogen peroxide $NO_x$, chromic anhydride $CrO_3$, selenium dioxide $SeO_2$, manganese dioxide $MnO_2$, lead dioxide $PbO_2$, osmium tetroxide $OsO_4$, silver oxide $Ag_2O$, cupric oxide CuO and mercury (II) oxide HgO. The oxygen acids include hot concentrated sulfuric acid $H_2SO_4$, nitrous acid $HNO_2$ and nitric acid $HNO_3$. The salts include sodium hydrochlorite NaOCl, bleaching powder $CaOCl_2$, potassium dichromate $K_2CrO_7$, potassium chromate $K_2Cr_2O_4$, potassium permanganate $KMnO_4$, potassium chlorate $KClO_3$ and potassium perchlorate $KClO_4$. The peroxides include hydrogen peroxide $H_2O_2$, sodium peroxide $Na_2O_2$ and benzoyl peroxide $(C_6H_5COO)_2$. There may be also included materials that have two or more valences, for example, trivalent iron ions $Fe^{3+}$, divalent copper ions $Cu^{2+}$ and lead tetracetate $Pb(CH_3CO_2)_4$. Fenton's reagents (e.g. $Fe^{+++}H_2O_2$) and dehydrogenation catalysts (e.g. Pt, Se, Zn) can also be used as the oxidizing agent.

The electrolytic oxidation treatment refers to a process in which a material is oxidized on an anode by electrolysis. It may use any system utilizing an increase in the positive electric charges of positive ions, decrease in the negative electric charges of negative ions, polymerization of negative ions, or increase in oxygen atoms or decrease in hydrogen atoms in a group of atoms. Such an electrolytic oxidation treatment is advantageous over oxidation by oxidizing agents in that a very strong oxidation can be achieved and less by-products may be formed.

The aeration treatment promotes oxidation by adding air to the condensate water. It is preferred to make air bubbles small, for example by using a distributor, to improve the the bubbling effect and enhance the efficiency of removal of, for example, organic solvents.

The electrodialysis treatment is carried out by introducing the condensate water into a partitioned chamber of an electric dialysis tank comprising an anode and a cathode separated by a diaphragm. An electric current is passed through the electrodes.

The diaphragm is preferably an ion exchange membrane. More preferably, the anode and cathode are separated by an anion exchange membrane and a cation exchange membrane, and the chamber comprises a cathode compartment, a plurality of concentrating compartments (compartments each partitioned with an anion exchange membrane at the cathode side and a cation exchange membrane at the anode side), a plurality of desalting compartments (compartments each partitioned with a cation exchange membrane at the cathode side and an anion exchange membrane at the anode side) and an anode compartment. The condensate water is preferably introduced into the desalting compartments, but may also preferably be introduced into the concentrating compartments. There is no particular limitation in the electrolytic solution introduced in the concentrating compartments and the cathode compartment. There is preferably used a 0.1 to 0.2N solution such as sodium sulfite, sodium sulfate, sodium chloride, potassium sulfate or sodium thiosulfate. A processing solution having fixing ability (a bleach-fixing solution or a fixing solution) or its waste liquor is very preferably used as the electrolytic solution introduced in the anode compartment as a further electrolyte solution may thereby become unnecessary.

The redistillation treatment refers to distillation carried out on the concentrated liquor obtained from the photographic process waste liquor. This is one of the so-called rectification operations. There may be employed either batch distillation (including simple distillation and batch rectification) or continuous distillation. There may also be employed continuous equilibrium distillation against continuous rectification. The pure water (having few components apart from water) obtained can be used in the photographic processing solutions. It is also advantageous to use a suitable separating agent in azeotropic distillation and extractive distillation. In this invention, a secondary treatment effect can also be obtained by so-called steam distillation. In respect of the pressure for the operation, high pressure distillation, atmospheric distillation, vacuum distillation and molecular distillation may be used.

The ion exchange resin treatment can be carried out by bringing any kind of ion exchange resin into contact with the photographic process waste liquor. Usable ion exchange resins are those in which a functional group is attached to a three-dimensional polycondensed polymeric substrate, and include cation exchange resins, anion exchange resins, chelate resins and adsorption resins.

Examples of chemical structures or methods of use of the ion exchange resins that can be preferably used are disclosed in Japanese Unexamined Patent Publication No. 4051/1986 (in particular, pages 54 to 57).

The pH-adjusting treatment adjusts the pH of the condensate water to around neutrality by adding, in most instances, a pH adjustor. This may be acid or alkali depending on the pH of the condensate water. The condensate water, which usually contain ammonia, is generally alkaline, and acids are then used, for example inorganic acids such as sulfuric acid, hydrochloric acid, phosphoric acid, boric acid and sulfamic acid, carboxylic acids such as acetic acid, oxalic acid, citric acid, malonic acid and tartaric acid, and aminopolycarboxylic acids such as ethylenediaminetetraacetic acid and nitrilotriacetic acid, as well as acidic salts such as sodium hydrogensulfate and ammonium sulfate.

In this invention, part of the vapor that is not condensed by the cooling and condensing means is desirably discharged to the outside open air through a gas-treating column. This can prevent harmful gas from being turned to vapor to leak outside, owing to slight decomposition of the photographic process waste liquor at the time of the evaporation treatment, or prevent harmful gas from leaking out as the evaporation vessel is pressurized.

When this treatment apparatus is stopped, the vapor or gas expanded by the heating of the inside of the evaporation vessel shrinks to bring it into a reduced pressure state; the evaporation vessel may break because of this load if kept in a perfectly hermetical state. The gas-treating column makes it possible to prevent this as air is led in from the outside. In the gas-treating column, there may be used, for example, adsorbents or deodorizers such as activated carbon or a zeolite. These absorbents or deodorizers must be able to pass gases, and therefore are preferably granular materials, including those having a grain size of from 0.3 mm to 15 mm. Particularly preferred are adsorbents or deodorizers having a grain size of from 0.8 mm to 6 mm.

These adsorbents or deodorizers may be provided in the gas-treating column packed in, for example, cloth or paper, and worked into shape. This minimizes trouble during replacement.

The concentrated liquor obtained after the evaporation may be discharged out of the evaporation vessel, or, for example, a thermoresistant and chemical-resistant bag may be provided in the evaporation vessel and the concentrated liquor may be taken out together with the bag after the treatment. In the case of the evaporation apparatus described in Japanese Unexamined Patent Publication No. 201442/1987 and Japanese Patent Application No. 288328/1986, the concentrated liquor can be taken out from a bottom part of the evaporation vessel in, for example, a thermoresistant and chemical-resistant bag through a device utilizing a rotary screw pump or through a valve. The thermoresistant and chemical-resistant bag is

preferably made of carbon fibers, aramid fibers, Teflon resin fibers, flax, glass fibers, polyethylene foam or polypropylene foam.

The concentrated liquor is preferably collected after it has been absorbed on a carrier and treated into a solid.

This carrier includes liquid-absorptive resins and solidifying materials. The carrier is preferably capable of absorbing the concentrated liquor in such a manner that liquid is not dropped when the carrier is carried. The so-called liquid-absorptive resin is preferably used.

The liquid-absorptive resin includes:

seed polysaccharide, seaweed polysaccharide, resin polysaccharide, fruit polysaccharide and root polysaccharide;

zansane gum, zanflow, guardrane, succinoglucan, cyzofinran, bluran, gelatin, casein, albumin, shellac;

starch derivatives, guar gum, derivatives of locust bean gum, cellulose derivatives, alginic acid derivatives, vinyl compounds and acrylic compounds; and

other polyethylene oxides.

Preferred examples of highly liquid-absorptive resins are:

(A) Grafted starch types:

(A-1) A starch/acrylonitrile graft polymer

(A-2) A starch/acrylic acid graft polymer

(A-1) can be prepared by the process described in Japanese Unexamined Patent Publication No. 43395/1974 and U.S. Patent No. 4,134,863, and (A-2) can be prepared by the process described in Japanese Patent Publication No. 46199/1978.

(B) Acrylic types:

(B-1) A sodium polyacrylate type

(B-2) A vinyl alcohol/acrylic acid copolymer

(B-2) can be repeatedly used after natural or forced drying.

(C) Polymers having a repeating unit of formula (I) or (II) shown below, or, more preferably, polymers having 10 to 70 % by weight of the unit(s) (I) and/or (II) and copolymerized with other ethylenic unsaturated monomers:

(I)

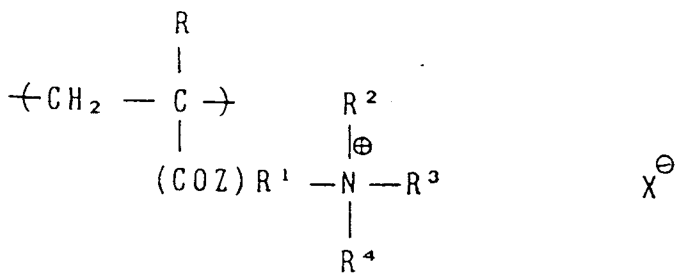

(II)

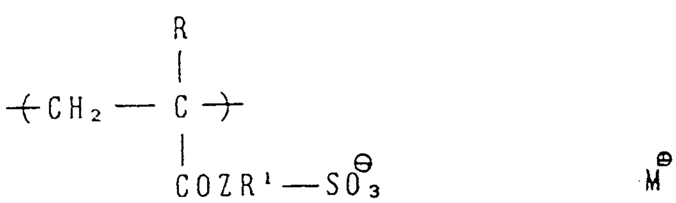

wherein R represents a hydrogen atom, a methyl group or a halogen atom, Z represents an oxy group or an imino group; n is 0 or 1; R′ represents an alkylene group having 1 to 6 carbon atoms (including a substituted alkylene group), a cycloalkylene group having 5 or 6 carbon atoms, an arylene group, an arylenealkylene group or an arylenebisalkylene group, provided that the above alkylene moiety has 1 to 6

carbon atoms and the above arylene moiety (that may be substituted) has 6 to 10 carbon atoms, including, for example, an arylene group substituted with a hydrophilic polar group such as

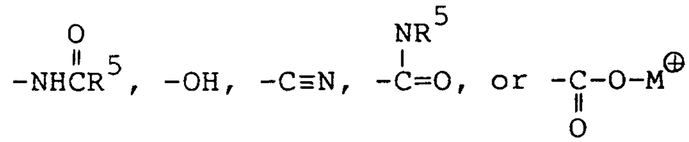

wherein R represents an alkyl group having 1 to 4 carbon atoms;
$R^2$, $R^3$ and $R^4$ each represent a hydrogen atom or an alkyl group having 1 to 6 carbon atoms, or form a heterocyclic group together with the nitrogen atom to which they are attached, the heterocyclic group optionally containing a sulfur or oxygen atom; M represents a hydrogen atom, or an ammonium group containing a soluble cation or a quaternary ammonium cation having an alkyl group having 6 or less carbon atoms; and X represents an acid anion.

The halogen substituent for R can be bromine or chlorine; the alkylene group having 1 to 6 carbon atoms may be substituted with a hydroxyl group; the arlylenealkylene group represented by $R^1$ includes a phenylenemethylene group, a phenyleneethylene group, a phenylenepropylene group and a phenylenebutylene group; and the arylenebisalkyl group represented by $R^1$ includes a phenylenedimethylene group.

The soluble cation represented by M includes sodium and potassium.

The heterocyclic group formed by $R^2$, $R^3$ and $R^4$ and the nitrogen atom to which they are attached includes pyridinium, imidazolium, oxazolium, thiazolium and morpholium.

The acid anion represented by X includes chlorides, bromides, acetates, p-toluenesulfonates, methanesulfonates, ethanesulfonates, methylsulfates, ethylsulfates and perchlorates.

The ethylenic unsaturated monomer copolymerized with the monomer providing units of formula (I) and/or formula (II) comprises one or more monomers, preferably having a cross-linkable group, for example 2-hydroxyethyl methacrylate, 2-hydroxyethyl acrylate or a monomer containing an active methylene group. Copolymerizable ethylenic unsaturated monomers of this type are described, for example, in U.S. Patents No. 3,459,790, No. 3,488,708, No. 3,554,987, No. 3,658,878, No. 3,929,482 and No, 3,939,130.

The preferred polymer is derived from one or more monomers listed below so as to contain 10 to 70 % by weight of these, or has repeating units of these:
2-Aminoethyl methacrylate hydrochloride;
N-(2-methacryloyloxyethyl)-N,N,N-trimethylammonium chloride;
N-(2-methacryloyloxyethyl)-N,N,N-trimethylammonium meto sulfate;
sodium 2-methacryloyloxyethyl-1 sulfonate; and
2-(N,N-dimethylamino)ethyl methacrylate hydrochloride.

The acid addition salt corresponding to formula (I) can be converted to a free amine when it is neutralized with a base.

The above polymers can be prepared by polymerizing suitable monomers in an aqueous solution according to conventional methods.

The monomer providing the unit of formula (I) can be prepared by the methods described in R. H. Yocum and E.B. Nyqist, "Functional Monomers", Marcel Dekker Inc., New York (1974) and U.S. Patent No. 2,780,604. The monomer providing the unit of formula (II) can be prepared by the methods described in U.S. Patents No. 3,024,221 and No. 3,506,707.

In some instances, this polymer can be prepared by (a) forming a polymer having an amine group into a quaternary compound or, alternatively, (b) reacting an amine with a polymer having a group reactive to the amine, for example, an active halogen group. Such techniques are known, and described in U.S. Patents No. 3,488,706 and No. 3,709,690 and Canadian Patent No. 601,958.

The resins set out above are commercially available. The commercially available products include Sumicagel N-100, Sumicagel SP-520, Sumicagel S-50, Sumicagel NP-1020, Sumicagel F-03, Sumicagel F-51, Sumicagel F-75 and Sumicagel R-30 (all of these are trade names; available from Sumitomo Chemical Co., Ltd.), Sunwet IM-300 and Sunwet IM-1000 (trade names; available from Sanyo Chemical Industries, Ltd.), Aquakeep 10SH-P (trade name; available from Seitetsu Kagaku Co., Ltd.) and Langeel F (trade name; available from Japan Exlan Co., Ltd.).

The liquid-absorptive resins preferably used have a shape suited for readily absorbing the liquid. Powdery or granular resins having a diameter of about 0.01 to 3 mm can advantageously be used in view of

their handling characteristics.

The solidifying materials used as the carrier may be any materials that can solidify the concentrated liquor of the photographic process waste liquor, and may or may not be accompanied with a chemical reaction when solidifying the liquor. Preferred solidifying materials are CaO, $Ca(OH)_2$, $CuCO_3$, silica gel, calcium chloride, aluminum oxide, calcium sulfate, magnesium oxide, barium oxide, granular soda lime and diphosphorus pentoxide.

The evaporation apparatus preferably has a repture disc to prevent accidents, for example occuring by clogging in the vapor discharging chamber for discharging the vapor formed by the evaporation and pressurizing the evaporation vessel. The repture disc is constituted, for example, such that it connects the evaporation vessel and the waste liquor feeding tank. This connecting pipe may be intercepted by means of a sheet, for example made of polyethylene, capable of being broken by pressure.

The evaporation apparatus preferably has a temperature sensor in the evaporation vessel. The apparatus may be so constituted that the heating means is turned off when the temperature sensor detects a temperature not lower than a certain degree, for example, a temperature of 120°C or higher. This prevents liquid-empty heating.

The evaporation apparatus preferably has a door which cannot be opened unless the temperature inside the evaporation vessel or the temperature in the treatment apparatus is a certain degree or lower (for example, 50°C or lower). Alternatively a warning signal may be given when someone trys opening the door.

Color negative photographic film waste liquor and color paper photographic process waste liquor may be treated separately or a mix of these may be treated. The waste liquor may be treated on the same treatment line or in a separate manner in different tanks. A mix of a plurality of kinds of the waste liquor may be treated.

The evaporation apparatus is preferably provided with means for reducing the pressure in the evaporating vessel, as this can lower the temperature in the evaporation vessel, whereby there may be generated less ill-smelling or harmful gases. On the same treatment line, the waste liquor in each tank may be separately treated or a mix of a plurality of all kinds of the waste liquor may be treated.

Typical examples of photographic processing solutions on which the treatment according to this invention can be carried out will now be described in detail. In the following there are chiefly described photographic processing solutions used when the photographic materials are color materials. Almost all the photographic process waste liquor are overflow solutions made when a light-sensitive silver halide color photographic material is processed by these photographic processing solutions.

A color developing solution is a processing solution used in color development processing (forming a color image, specifically by a coupling reaction between an oxidized product of a color developing agent and a color coupler). It is usually necessary to incorporate a color developing agent in the color developing solution, but the color developing agent may be included in the color photographic material and processing carried out with a color developing solution or alkali solution (activator solution) containing the color developing agent. The color developing agent contained in the color developing solution is an aromatic primary amine color developing agent, including aminophenol and p-phenylenediamine derivatives.

The aminophenol type developing agent includes o-aminophenol, p-aminophenol, 5-amino-2-oxy-toluene, 2-amino-3-oxy-toluene and 2-oxy-3-amino-1,4-dimethyl-benzene.

The color developing solution may contain an alkali agent usually used in developing solutions, and may also contain various additives, for example, benzyl alcohol and a halogenated alkali metal, or a development controlling agent and a preservative. It may also further contain any kind of anti-foaming agent or surface active agent, and an organic solvent such as methanol, dimethylformamide or dimethylsulfoxide.

The color developing solution may also contain an antioxidant if necessary. Chelating agents may also be further used in combination as a sequestering agent.

A bleach-fixing solution is a solution used in bleach-fixing (oxidizing metallic silver formed by development to a silver halide, and then forming a water soluble complex and at the same time effecting dye formation at a non-colored portion of a coupler). Any type of bleaching agent may be used in the bleach-fixing solution.

The bleach-fixing solution may also contain any kind of pH buffering agent alone or in combination of two or more. It may still further contain any kind of brightening agent, anti-foaming agent or surface active agent. It may also appropriately contain a preservative such as bisulfite addition products, an organic chelating agent such as aminopolycarboxylic acid, a stabilizer such as nitroalcohol and nitric acids, and an organic solvent. There may be further added in the bleach-fixing solution any bleaching accelerator, for example those described in Japanese Unexamined Patent Publications No. 280/1971, No. 8506/1970 and No. 556/1971, Belgian Patent No. 770,910, Japanese Patent Publications No. 8836/1970 and No. 9854/1978 and Japanese Unexamined Patent Publications No. 71634/1979 and No. 42394/1974.

Washing-substitutive stabilizing processing may be used to reduce the quantity of the waste liquor from the processing.

The stabilizing solution includes stabilizing solutions which stabilize a color image and which function as a hydro-extracting bath to prevent stains such as washing non-uniformity. A color controlling solution to color the color image and an antistatic solution containing an antistatic agent are also included in these stabilizing solutions. When bleach-fixing components are brought into the stabilizing solution from a previous bath, measures are taken to neutralize, desalt and inactivate these so as not to reduce the storage stability of dyes.

Components contained in the stabilizing solution include chelating agents having a stability constant to iron ions of 6 or more (preferably 8 or more). These chelating agents include organic carboxylic acid chelating agents, organic phosphoric acid chelating agents, polyhydroxyl compounds and inorganic phosphoric acid chelating agents. Particularly preferred are diethylenetriaminepentaacetic acid, 1-hydroxyethylidene-1,1-diphosphonic acid, and salts thereof. These compounds are preferably used in concentrations of 0.1 g to 10 g per litre of stabilizing solution, more preferably 0.5 g to 5 g per litre of stabilizing solution.

Compounds which may be added to the stabilizing solution include ammonium compounds. These include ammonium salts of inorganic compounds, such as ammonium hydroxide, ammonium bromide, ammonium carbonate, ammonium chloride, ammonium hypophosphite, ammonium phosphate, ammonium phosphite, ammonium fluoride, acid ammonium fluoride, ammonium fluoroborate, ammonium arsenate, ammonium hydrogencarbonate, ammonium hydrogen fluoride, ammonium hydrogensulfate, ammonium sulfate, ammonium iodide, ammonium nitrate, ammonium pentaborate, ammonium acetate, ammonium adipate, ammonium lauryltricarboxylate, ammonium benzoate, ammonium carbamate, ammonium citrate, ammonium diethyldithiocarbamate, ammonium formate, ammonium hydrogenmalate, ammonium hydrogenoxalate, ammonium hydrogenphthalate, ammonium hydrogentartarate, ammonium lactate, ammonium malate, ammonium maleate, ammonium oxalate. ammonium phthalate, ammonium pirate, ammonium pyrolidinedithiocarbamate, ammonium salicylate, ammonium succinate, ammonium sulfanilate, ammonium tartalate, ammonium thioglycolate and 2,4,6-trinitrophenol ammonium. These ammonium compounds may be used in an amount of from 0.05 to 100 g per litre of the stabilizing solution.

Other compounds which may be added to the stabilizing solution include pH adjusters, mildew-proofing agents such as 5-chloro-2-methyl-4-isothiazolin-3-one, 2-octyl-4-isothiazolin-3-one and 1-2-benzisothiazolin-3-one, as well as those described in Japanese Unexamined Patent Publication No. 43741/1986 (pages 26 to 30), preservatives such as water-soluble metallic salts, dispersing agents such as ethylene glycol, polyethylene glycol and polyvinyl pyrrolidone (PVP K-15, Rubiscol K-17), hardening agents such as formalin and brightening agents.

It is particularly preferred to use a washing-substitutive stabilizing solution containing any of the above mildew-proofing agents as less tar is produced in the evaporation apparatus when they are used.

When the light-sensitive materials to be processed are negatives, an aldehyde derivative may be added to the stabilizing solution to improve the storage stability of the photographic images.

In the stabilizing solution for negatives, other additives, for example a droplet irregularity preventive material, a pH adjuster, a hardening agent, an organic solvent, a moisture conditioner or a color-toning agent, may be added if necessary.

The stabilizing treatment using the washing-substitutive stabilizing solution is not a conventional processing in which a large quantity of running water is used to wash away the processing solution of a previous stage that has adhered to or impregnated into a light-sensitive photographic material, but a processing that has a function equal to or superior to this by replenishing the stabilizing solution in an amount as small as 30 ml/m$^2$ to 9,000 ml/m$^2$, preferably 60 ml/m$^2$ to 3,000 ml/m$^2$. Specifically, this refers to the process described in Japanese Unexamined Patent Publication No. 134636/1983.

It is not required to provide feeding/discharging pipes for the washing outside the automatic processing machine as in conventional cases.

A stilbene type brightening agent may also be used in the color developing solution for color paper and the stabilizing solution.

Components contained in the waste liquor in the color developing solution are the above components or additives and components eluted and accumulated from the photographic materials being processed.

Components contained in the waste liquor of the bleach-fixing solution and stabilizing solution are the above various components or additives and components eluted and accumulated from the photographic materials being processed.

The evaporation apparatus is effective when the photographic process waste liquor contains thiosulfate, sulfite and ammonium salts in large amounts, and is particularly effective when it contains an organic acid

ferric complex salt and thiosulfate.

This invention is especially suited in the instance in which the photographic process waste liquor produced with the development processing of light-sensitive photographic materials in an automatic processing machine is treated inside the automatic processing machine or in the vicinity thereof. The automatic processing machine will now be described.

In Fig. 1, the automatic processing machine is denoted by the numeral 100. A rolled light-sensitive photographic material F is continuously guided to a color developing tank CD, a bleach-fixing tank BF and a stabilizing tank Sb for processing, and rolled up after drying D. The numeral 101 denotes replenishing solution tanks. The amount of the material F is detected by a sensor 102, and replenishing solutions are supplied to the respective processing tanks through a controlling device 103 according to the information detected.

Once the replenishing solutions are supplied to the respective photographic processing tanks, overflowed waste liquor is discharged from the processing tanks and collected in a stock tank 104. A simple method to move the overflowed liquor to the stock tank 104 is to allow it to naturally drop through a guide tube. In some instance, it can be forcedly transported, for example by a pump.

As described above, the components are different in the waste liquor in each of the tanks CD, BF and Sb. It is preferred to carry out the treatment at one time by mixing all the liquors together.

Fig. 2 is a schematic constitutional illustration showing more specifically apparatus which can be used in the method of this invention. Fig. 3 is a constitutional illustration thereof.

In the figures, the numeral 1 denotes an evaporation vessel, composed of a cylindrical upper section 1a having a larger diameter and a cylindrical lower section 1b having a smaller diameter, and provided at an upper part of the lower section 1b with a heating means and at a lower part thereof with a ball valve 3. From a part above the ball valve 3, a connecting pipe 4 is provided connecting the upper section 1a, on which pipe a liquid level sensor 5 is provided. Below the lower section 1b a sludge receptacle 6 is provided, and a bag 7 made of polypropylene is fixed in the inside thereof by o-rings 8.

On the upper section 1a there is provided a vapor discharging pipe 9 connected to a stored liquid lead-in pipe 12 through a heat exchanger 10 and a cooling and condensing means 11. In the cooling and condensing means 11, a large number of a cooling heat-dissipation plates 13 (illustrated with partial omission) are provided on the vapor discharging pipe 9 and a liquid level sensor 14 is further provided. At a lower part of the cooling and condensing means 11, a cooling water lead-in pipe 15 is provided, and connected through a cooling water circulating pump 16 to a shower pipe 17 bored with a large number of small holes.

The air inside the cooling and condensing means 11 is released outside the treatment apparatus by a cooling fan 18. The stored liquid lead-in pipe 12 is connected to a stored liquid tank 19. In the inside of this tank there is provided an activated carbon cartridge 20, and in the inside thereof is activated carbon packed in a paper bag. Another activated carbon cartridge 22 is further provided outside the stored liquid tank 19, and in the inside thereof is activated carbon packed 23 in a paper bag. In the stored liquid tank 19, there is also provided an air lead-in pipe 24, which is set into the waste liquor in the evaporation vessel 1 though an air pump 25. The numeral 26 denotes a waste liquor feeding tank provided with a waste liquor lead-in pipe 27 and connected to the upper section 1a through the heat exchanger 10. On the waste liquor feeding tank 26, there is also provided a liquid level sensor 29. The waste liquor feeding tank 26 and the stored liquid tank 19 are set on a pedestal 30 having handgrips and capable of being pulled out, as shown in Fig. 3.

Further provided on the upper section 1a is a guide pipe 31, which is connected to the waste liquor feeding tank 26 though a plunger disc 32. A temperature sensor 33 is also provided on the upper section 1a.

The process of carrying out the heating and evaporation treatment is now schematically described.

The waste liquor feeding tank 26, through which about 20 litres of overflow liquid from the automatic processing machine is conveyed to the evaporation apparatus and which is positioned on a pulled-out pedestal 30, has connected to it a waste liquor feeding pipe 27 and a liquid level sensor 29. The stored liquid tank 19 previously provided with activated carbon cartridges 20 and 22 packed with the activated carbon 21 and 23 in paper bags respectively is further set on the pedestal 30, which is, after connection of the stored liquid lead-in pipe 12 and the air lead-in pipe 24, put back inside the evaporation apparatus.

Subsequently, a bag 7 made of polypropylene is set in the sludge receptacle 6 provided below the lower section 1b and fixed to the lower section 1b by two o-rings 8. After feeding water into the cooling and condensing means 11, the apparatus is switched on, the air pump 25 is actuated and air in the stored liquid tank 19 is led into the evaporation vessel 1 through the air lead-in pipe 24, provided that the lead end of the air discharging pipe 9 is positioned lower than the heating means 2 provided outside the evaporation vessel 1. The cooling fan 18 and cooling water circulating pump 16 are next actuated in this order, to circulate the

stored water in such a way that it is fed on the shower pipe 17 or on the heat dissipation plates 13 of the vapor discharging pipe 9 kept in the cooling and condensing means 11 through the cooling water lead-in pipe 15, and again stored at the lower part of the cooling and condensing means 11.

Subsequently the bellows pump 28 is actuated, and the waste liquor in the waste liquor feeding tank 26 passes the heat exchange means 10 through the waste liquor lead-in pipe 27, thereafter being fed into the evaporation vessel 1. The quantity of the waste liquor in the evaporation vessel 1 increases and the liquid level in the connecting pipe 4 increases. Once the liquid level is detected by the liquid level sensor 5 for more than, for example, 3 seconds, the bellows pump 28 stops working and at the same time the heating means 2 is switched on, so that the evaporation is started. The evaporation decreases the quantity of the waste liquor in the evaporation vessel 1 which lowers the liquid level in the connecting pipe 4. Once the liquid is not detected by the liquid level sensor 5 for more than 3 seconds, the bellows pump 28 is again switched on, and the waste liquor in the waste liquor feeding tank 26 is fed into the evaporation vessel 1. This operation is repeated. The vapor formed by evaporation passes through the vapor discharging pipe 9, and, after heat exchange with the waste liquor, is condensed by the cooling and condensing means 11. The condensate water passes through the stored water lead-in pipe 12 to the stored liquid tank 19, passes through the activated carbon 21 in the activated carbon cartridge 20, and is stored in the stored liquid tank 19.

Once the liquid level sensor 29 detects that the waste liquor in the waste liquor feeding tank 26 has run short, the bellows pump 28 stops working, the heating means 2 is switched off, the cooling water circulating pump 18 and the cooling fan are stopped after 2 hours, a lamp is turned on and a buzzer also sounds to indicate that the evaporation treatment has been completed. At the same time the air pump 25 stops. At this time, the ball valve 3 is opened to allow sludge in the evaporation vessel 1 to drop into the polypropylene bag 7, and thereafter the bag is taken out by releasing the o-rings 8.

When the liquid level sensor 14 detects that the stored water in the cooling and condensing means 11 in the course of the evaporation has run short, a lamp is turned on and a buzzer also sounds.

Similarly, in the course of the evaporation, when the temperature sensor 33 detects that the temperature in the evaporation vessel is raised to 120° C because of an extraordinary lowering of the liquid level for any reason, causing liquid-empty heating, a lamp is turned on and a buzzer also sounds, and at the same time the heating means is switched off. Then, the evaporation treatment is discontinued as described above.

Fig. 4 is a cross-section of the heating means 2 illustrated in Fig. 2 and Fig. 3. There is provided on the periphery of a wall 34 of the evaporation vessel 1 made of titanium a heater block 36 made of SUS 304 stainless steel. Four cartridge heaters 35 are embedded in this heater block 36. A heat insulator 37 is also provided on the peripheral surface of the heater block 36.

Fig. 5 to Fig. 8 are views illustrating a variety of examples of the liquid level sensor.

In Fig. 5, the connecting pipe 4 extends upward from the lower section 1b beneath the heating means 2 at an angle of about 45 degrees to the wall of the evaporation tank 1. The liquid level sensor 5 is provided on the connecting pipe 4.

In Fig. 6, the liquid level sensor 5 is directly set inside the upper secion 1a. One terminal is earthed to a wall of the upper section 1a.

In Fig. 7, a lower part of the liquid level sensor 5 comprises a float 38, and a magnet 39 is provided on an upper part of the liquid level sensor 5. A switch turns off when the part on which the magnet 39 is set is elevated by elevation of the liquid level.

In Fig. 8, a lower part of the liquid level sensor 5 similarly comprises a float 38. When the liquid level is elevated, an upper part of the liquid level sensor 5 intercepts infrared rays emitted from an infrared emitter 40 and the switch turns off.

Fig. 9 to Fig. 11 illustrate other examples of the means for cooling and condensing the vapor.

In Fig. 9, the cooling and condensing means are provided in a duplex fashion and comprise an upper cooling and condensing means 11a and a lower cooling and condensing means 11b. The stored water is held at the lower part of the lower cooling and condensing means 11b. This water is sent to the shower pipe 17 provided at an upper part of the upper cooling and condensing means 11a, through the cooling water lead-in pipe 15, by the cooling water circulating pump 16, fed on the vapor discharging pipe 9 provided with air cooling heat dissipation plates 13, and thereafter sent to the shower pipe 17 at the upper part of the lower cooling and condensing means 11b. Similarly, it is fed through the vapor discharging pipe 9, and thereafter returns to the stored water tank at the lower part.

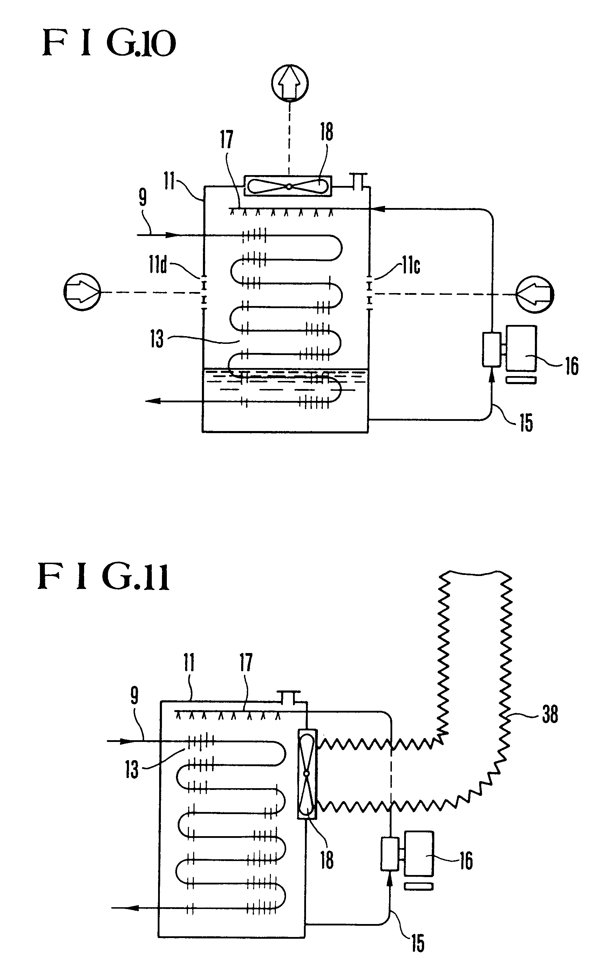

In Fig. 10 an air cooling fan 18 is provided at an upper part. The air is led in from both sides 11c and 11d of the cooling and condensing means 11, and discharged outside the evaporation apparatus through the air cooling fan 18.

In Fig. 11 a duct 38 is provided outside the air cooling fan 18. In this instance, the means for feeding

water does not function. In this manner, the apparatus may be constituted such that no water is fed when it is possible to set the duct and the water can be fed when it is impossible to set the duct.

## Examples

After imagewise printing on a commercially available color photographic paper, continuous processing was carried out using the following processing steps and processing solutions:

| Standard processing steps: | | |
|---|---|---|
| (1) Color developing | 38°C | 3 min. |
| (2) Bleach-fixing | 38°C | 1 min. 30 s. |
| (3) Stabilizing | 25°C to 35°C | 3 min. |
| (4) Drying | 75°C to 100°C | about 2 min. |

Composition of processing solutions:

| [Color developing tank solution] | |
|---|---|
| Benzyl alcohol | 15 ml |
| Ethylene glycol | 15 ml |
| Potassium sulfite | 2.0 g |
| Potassium bromide | 1.3 g |
| Sodium chloride | 0.2 g |
| Potassium carbonate | 24.0 g |
| 3-Methyl-4-amino-N-ethyl-N-(β-methanesulfonamidoethyl)aniline sulfate | 4.5 g |
| Brightening agent (a 4,4′-diaminostilbenedisulfonic acid derivative) | 1.0 g |
| Hydroxylamine sulfate | 3.0 g |
| 1-Hydroxyethylidene-1,1-diphosphonic acid | 0.4 g |
| Hydroxyethyliminodiacetic acid | 5.0 g |
| Magnesium chloride•hexahydrate | 0.7 g |
| Disodium 1,2-dihydroxybenzene-3,5-disulfonate | 0.2 g |
| Made up to 1 litre by adding water, and adjusted to pH 10.20 using potassium hydroxide and sulfuric acid. | |

| [Color developing replenishing solution] | |
|---|---|
| Benzyl alcohol | 20 ml |
| Ethylene glycol | 20 ml |
| Potassium sulfite | 3.0 g |
| Potassium carbonate | 24.0 g |
| Hydroxylamine sulfate | 4.0 g |
| 3-Methyl-4-amino-N-ethyl-N-($\beta$-methanesulfonamidoethyl)aniline sulfate | 6.0 g |
| Brightening agent (a 4,4′-diaminostilbenedisulfonic acid derivative) | 2.5 g |
| 1-Hydroxyethylidene-1,1-diphosphonic acid | 0.5 g |
| Hydroxyethyliminodiacetic acid | 5.0 g |
| Magnesium chloride•hexahydrate | 0.8 g |
| Disodium 1,2-dihydroxybenzene-3,5-disulfonate | 0.3 g |
| Made up to 1 litre by adding water, and adjusted to pH 10.70 using potassium hydroxide and sulfuric acid. | |

| [Bleach-fixing tank solution] | |
|---|---|
| Ethylenediaminetetraacetic acid ferric ammonium dihydrate | 60.0 g |
| Ethylenediaminetetraacetic acid | 3.0 g |
| Ammonium thiosulfate (a 70 % solution) | 100 ml |
| Ammonium sulfite (a 40 % solution) | 27.5 ml |
| Made up to 1 litre by adding water, and adjusted to pH 7.1 using potassium carbonate or glacial acetic acid. | |

| [Bleach-fixing replenishing solution A] | |
|---|---|
| Ethylenediaminetetraacetic acid ferric ammonium dihydrate | 260.0 g |
| Potassium carbonate | 42.0 g |
| Made up to 1 litre by adding water.<br>The pH of this solution is adjusted to 6.7 ± 0.1 with acetic acid or ammonia water. | |

| [Bleach-fixing replenishing solution B] | |
|---|---|
| Ammonium thiosulfate (a 70 % solution) | 500.0 ml |
| Ammonium sulfite (a 40 % solution) | 250.0 ml |
| Ethylenediaminetetraacetic acid | 17.0 g |
| Glacial acetic acid. | 85.0 ml |
| Made up to 1 litre by adding water.<br>The pH of this solution is adjusted to 5.3 ± 0.1 with use of acetic acid or ammonia water. | |

| [Wahing-substitutive stabilizing tank solution and replenishing solution] | |
|---|---|
| Ethylene glycol | 1.0 g |
| 2-Methyl-4-isothiazolin-3-one | 0.20 g |
| 1-Hydroxyethylidene-1,1-diphosphonic acid (a 60 % solution) | 1.0 g |
| Ammonia water (a 25 % aqueous solution of ammonium hydroxide) | 2.0 g |
| Made up to 1 litre using water, and adjusted to pH 7.0 using 50 % sulfuric acid. | |

Example 1

The tanks of an automatic processing machine were filled with the above color developing tank solution, bleach-fixing tank solution and stabilizing tank solution to carry out a running test while processing a sample of the above commercially available color photographic paper while supplying the above color developing replenishing solution, bleach-fixing replenishing solutions A and B and stabilizing replenishing solution through a bellows pump at intervals of 3 minutes. The replenishing amount was such that the color developing tank was replenished in an amount of 190 ml, the bleach-fixing tank was replenished in an amount of 50 ml for each of the bleach-fixing replenishing solutions A and B, and the stabilizing tank was replenished with the washing-substitutive stabilizing replenishing solution in an amount of 250 ml, each per 1 $m^2$ of the color photographic paper. The stabilizing tank in the automatic processing machine comprised first to third tanks in the direction of the flow of the sample, wherein the replenishing was carried out from the last tank, the solution overflowed from the last tank was flowed into the tank anterior thereto and further the solution overflowed therefrom was flowed into the tank further anterior thereto (a multi-tank counter-current system).

Continuous processing was carried out until the total replenishing amount of the washing-substitutive stabilizing solution was 3 times the capacity of the stabilizing tank.

400 g of potassium carbonate was previously dissolved in the photographic process waste liquor and 500 g of sodium hydrogensulfate was added into the stored liquid tank. Heater blocks having different lengths were used, and the heat density of the heating means was varied as in Table 1. In addition, in order to confirm the effect of blowing air into the waste liquor in the evaporation vessel, the air pump was switched on or off as indicated in Table 1. An anti-foaming agent FS Antifoam 025 (trade name; available from Dow-Corning Corp.) in amount of 4 g was also previously added to the photographic process waste liquor as occasion demands as shown in Table 1, and the surface tension of the photographic process waste liquor was lowered to from 19 dyne/cm to 26 dyne/cm.

The time required for the photographic process waste liquor in the evaporation vessel to be blown into the vapor lead-in pipe because of bumping after the start button was pushed was measured, and ill smell generated from the apparatus was observed. The results obtained are shown in Table 1.

Table 1

| Test No. | Heat density J/m² x $10^8$ (kcal/cm²) | Air pump | Anti-foaming agent | Time taken before spouting | Smell |
|---|---|---|---|---|---|
| 1 (Comp. Exa.) | 8.4 (20) | On | Present | 1 h | D |
| 2 ( " ) | 8.4 (20) | Off | None | 1 h | D |
| 3 ( " ) | 8.4 (18) | Off | None | 1h 30min | D |
| 4 ( " ) | 7.2 (17.2) | Off | None | 5 h | C |
| 5 ( " ) | 3.8 (9) | Off | None | 5h 30min | C |
| 6 ( " ) | 3.6 (8.6) | Off | None | 7 h | B |
| 7 ( " ) | 1.7 (4) | Off | None | 8 h | B |
| 8 ( " ) | 1.7 (4) | On | None | 12 h | A |
| 9 (This inv. ) | 1.7 (4) | Off | Present | 10 h | B |
| 10 ( " ) | 1.7 (4) | On | Present | No spouting till completion of treatment | A |

Symbols used in Table 1 represent the following:

D: Seriously ill-smelling.

C: Slightly ill-smelling.

B: Very slightly ill-smelling, but so slightly that no one becomes aware of the smell without careful smelling.

A: No ill-smelling at all.

As is clear from Table 1, if the heat density is more than 17.2 kcal/cm$^2$, bumping takes place as the concentration proceeds, but controlling the heat density to 17.2 kcal/cm$^2$ or less reduces the bumping. There also is no effect at all of blowing in air or adding an anti-foaming agent when the heat density is more than 17.2 kcal/cm$^2$, but, particularly in Test No. 10 in which the blowing of air and addition of the anti-foaming agent were employed together, no spouting of the photographic process waste liquor in the evaporation vessel by bumping occurred until the evaporation was completed (after 17 hours).

As described above, in the process of the invention described in Example 1, in which the heat density of the heating means is controlled to about 17.2 kcal/cm$^2$ or less, the generation of ill-smelling and harmful gas can be suppressed, and at the same time accidents such as bumping when the photographic process waste liquor is heated can be prevented. The process moreover has the advantages that the heating efficiency is good, the evaporation efficiency is good, energy cost can be saved, and the apparatus used can be made compact.

Example 2

Example 1 was repeated except for the modifications as follows:
In the photographic process waste liquor 400 g of potassium carbonate was previously dissolved, and 500 g of sodium hydrogensulfate was added to the stored liquid tank. The heat density of the heating means was controlled to about 1.7 x $10^8$ J/m$^2$ (4 kcal/cm$^2$). An anti-foaming agent FS Antifoam 025 (trade name; available from Dow-Corning Corp.) in amount of 4 g was also previously added to the photographic process waste liquor. 20 litres of waste liquor was treated and cooled. Thereafter, the ball valve at the lower part of the evaporation vessel was opened to remove sludge present in the evaporation vessel, which was found to be in an amount of 1.2 litres.

Next, an evaporation treatment apparatus which could not be used for the process of this invention was used to treat photographic process waste liquor. This evaporation apparatus has basically the same structure as the evaporation apparatus used in Test 11 as shown in Fig. 2 to Fig. 4, but the bellows pump is not so constituted that it may be switched on or off depending on whether or not the liquid level sensor 5 detects the liquid level. Thus it is so constituted that the liquid level sensor 5 may detect the liquid level to stop the operation of the bellows pump when 20 litres of the waste liquor has been fed into the evaporation vessel, but it does not follow that the bellows pump is actuated according to the fall in the liquid level with the subsequent progress of the evaporation. The evaporation apparatus used in Test 12 is equipped with a timer so that the treatment is stopped when the time, which was previously measured, at which 20 litres of the waste liquor is concentrated to 1.2 litres.

The smells generated from the apparatus when the above two treatments were carried out were observed to obtain the results shown in Table 2:

Table 2

| Test No. | Smell |
|---|---|
| 11 (This Invention) | A |
| 12 (Comparative Example) | D |

The symbols used in Table 2 represent the following:
D: Seriously ill-smelling.
A: No ill-smelling at all.

As is clear from Table 2, there is no smell in Test No. 11 of this invention, but there is serious smell (in particular, a mercapto smell) in Test No. 12.

Next, in the test apparatus used in the process of this invention, the liquid level sensor 5 was provided on the inside of the evaporation vessel. As a result, the liquid level showed slightly larger hunting (Test No. 13).

Subsequently, with the liquid level sensor 5 provided on the outside, a modification was made so that the bellows pump was switched off and on immediately depending on whether the liquid level was detected or not. As a result, there was substantially the same liquid level hunting (Test No. 14).

Test No. 14 was then modified by providing the liquid level sensor 5 on the inside of the evaporation vessel (Test No. 15); the liquid level hunting was even more enlarged. In the course of these tests the smell generated from the evaporation apparatus was observed to obtain the results in Table 3.

Table 3

| Test No. | Smell |
|---|---|
| 13 (This invention) | B |
| 14 ( " ) | B |
| 15 ( " ) | C |

Symbols used in Table 3 mean the following:

C: Slightly ill-smelling.

B: Very slightly ill-smelling, but so slightly that no one becomes aware of the smell without careful smelling.

As is clear from Table 3, the results were inferior to Test No. 11 reported previously.

As described above, the invention illustrated in Example 2, which is provided with means for continuously or intermittently feeding the waste liquor into the evaporation vessel according to a signal from the means for detecting the quantity of the waste liquor in the evaporation vessel, can surely feed the waste liquor to be treated, depending on the quantity of the waste liquor remaining in the evaporation vessel. Moreover, since the waste liquor to be treated can be treated by concentration-by-heating in a state that it is always kept in a prescribed quantity, the waste liquor can be treated by concentration-by-heating always in an optimum state. Thus there can be minimized the harmful or ill-smelling components generated from the photographic process waste liquor.

Example 3

Example 1 was repeated except for modifications as follows:

In the photographic process waste liquor 400 g of potassium carbonate was previously dissolved, and 500 g of sodium hydrogensulfate was added to the stored liquid tank.

The heat density of the heating means was controlled to about 1.7 x $10^8$ J/m$^2$ (4 kcal/cm$^2$), and an anti-foaming agent FS Antifoam 025 (trade name; available from Dow-Corning Corp.) in amount of 4 g was also previously added to the photographic process waste liquor.

Next, using evaporation apparatus having the cooling and condensing means but having no means for feeding water, another similar treatment was carried out.

In the above two tests, the quantity of the stored liquid in the stored liquid tank was measured at the time the tests were completed, and at the same time the smell generated from the apparatus was observed.

The results obtained are shown in Table 4:

Table 4

| Test No. | Stored water | Stored liquid quantity in stored liquid tank (litre) | Smell |
|---|---|---|---|
| 16 (This invention) | Present | 17 | A |
| 17 (Comparative Example) | None | 2 | D |

Symbols used in Table 4 mean the following:

D: Seriously ill-smelling.

A: No ill-smelling at all.

As is clear from Table 4, the rate of condensation is high and no smell is generated in Test No. 16 of this invention, but the rate of condensation is low and serious ill-smells are generated in Test No. 17.

## Claims

**1.** A method for concentrating photographic process waste liquor by evaporation, which comprises:

heating the liquor in an evaporation vessel with heating means, wherein the heating means provides a heat density of $7.2 \times 10^8$ J/m$^2$ (17.2 kcal/cm$^2$) or less;

adding a compound to the liquor which controls the surface tension of the liquor to $1.9 \times 10^{-2}$ to $6.5 \times 10^{-2}$ N/m (19 to 65 dyne/cm); and

intermittently feeding in the liquor according to a signal from means for detecting the quantity of the liquor in the vessel.

**2.** A method according to claim 1, which comprises feeding a gas into the liquor.

**3.** A method according to claim 1 or 2, wherein the surface tension of the liquor is controlled to $2.0 \times 10^{-2}$ to $6.5 \times 10^{-2}$ N/m (20 to 65 dyne/cm).

**4.** A method according to claim 3, wherein the surface tension of the liquor is controlled to $2.5 \times 10^{-2}$ to $6.0 \times 10^{-2}$ N/m (25 to 60 dyne/cm).

**5.** A method according to any one of the preceding claims, wherein the compound which controls the surface tension of the liquor is fed into the vessel by the same means by which the liquor is fed into the vessel.

**6.** A method according to any one of the preceding claims, wherein the heating means provides a heat density of not less than $4.2 \times 10^5$ J/m$^2$ (0.01 kcal/cm$^2$).

**7.** A method according to any one of the preceding claims, wherein the means for detecting the quantity of the liquor in the vessel is a liquid level sensor.

**8.** A method according to claim 7, wherein the feeding of the waste liquor into the evaporation vessel is stopped when the sensor detects a liquid level for a set time, and started when the sensor does not detect said level for a set time.

**9.** A method according to claim 8, wherein the set time is from 1 second to 10 minutes.

**10.** A method according to claim 9, wherein the set time is from 1 second to 1 minute.

11. A method according to any one of claims 7 to 10, wherein the sensor is provided in a connecting pipe outside the vessel.

**Revendications**

1. Procédé de concentration par évaporation d'eaux usées de procédés photographiques, dans lequel :
   on chauffe les eaux usées dans un récipient d'évaporation avec un moyen de chauffage, où le moyen de chauffage fournit une densité de chaleur égale ou inférieure à 7,2 x $10^8$ J/$m^2$ (17,2 kcal/$cm^2$) ;
   on ajoute aux eaux usées un composé qui règle la tension superficielle de l'eau à 1,9 x $10^{-2}$ à 6,5 x $10^{-2}$ N/m (19 à 65 dyne/cm) ; et
   on introduit de façon intermittente les eaux usées selon un signal provenant d'un moyen de détection de la quantité des eaux usées dans le récipient.

2. Procédé selon la revendication 1, dans lequel on introduit un gaz dans les eaux usées.

3. Procédé selon la revendication 1 ou 2, dans lequel on règle la tension superficielle des eaux usées à 2,0 x $10^{-2}$ à 6,5 x $10^{-2}$ N/m (20 à 65 dyne/cm).

4. Procédé selon la revendication 3, dans lequel on règle la tension superficielle des eaux usées à 2,5 x $10^{-2}$ à 6,0 x $10^{-2}$ N/m (25 à 60 dyne/cm).

5. Procédé selon l'une quelconque des revendications précédentes, dans lequel on introduit dans le récipient le composé qui règle la tension superficielle des eaux usées par le même moyen que celui avec lequel on introduit les eaux usées dans le récipient.

6. Procédé selon l'une quelconque des revendications précédentes, dans lequel le moyen de chauffage fournit une densité de chaleur d'au moins 4,2 x $10^5$ J/$m^2$ (0,01 kcal/$cm^2$).

7. Procédé selon l'une quelconque des revendications précédentes, dans lequel le moyen pour détecter la quantité d'eaux usées dans le récipient est un capteur de niveau de liquide.

8. Procédé selon la revendication 7, dans lequel l'introduction des eaux usées dans le récipient d'évaporation est arrêtée lorsque le capteur détecte un certain niveau de liquide pendant un temps donné, et est démarrée lorsque le capteur ne détecte pas ledit niveau pendant un temps donné.

9. Procédé selon la revendication 8, dans lequel le temps donné est de 1 seconde à 10 minutes.

10. Procédé selon la revendication 9, dans lequel le temps donné est de 1 seconde à 1 minute.

11. Procédé selon l'une quelconque des revendications 7 à 10, dans lequel le capteur est disposé dans une canalisation de raccordement à l'extérieur du récipient.

**Patentansprüche**

1. Verfahren zum Konzentrieren von Abwasser bzw. Abfallflüssigkeit aus photographischen Prozessen durch Verdampfen, bei dem man
   die Flüssigkeit in einem Verdampfungsgefäß mittels einer Heizeinheit erwärmt, wobei die Heizeinneit eine Wärmedichte von 7,2 x $10^8$ J/$m^2$ (17,2 kcal/$cm^2$) oder weniger liefert,
   der Flüssigkeit eine Verbindung zusetzt, welche die Oberflächenspannung der Flüssigkeit auf 1,9 x $10^{-2}$ bis 6,5 x $10^{-2}$ N/m (19 - 65 dyne/cm) steuert bzw. einstellt, und
   die Flüssigkeit intermittierend nach Maßgabe eines Signals von einer Einheit zum Erfassen oder Messen der Flüssigkeitsmenge im Gefäß einspeist.

2. Verfahren nach Anspruch 1, bei dem ein Gas in die Flüssigkeit eingespeist wird.

3. Verfahren nach Anspruch 1 oder 2, wobei die Oberflächenspannung der Flüssigkeit auf 2,0 x $10^{-2}$ bis 6,5 x $10^{-2}$ N/m (20 - 65 dyne/cm) gesteuert oder eingestellt wird.

4. Verfahren nach Anspruch 3, bei dem die Oberflächenspannung der Flüssigkeit auf 2,5 x $10^{-2}$ bis 6,0 x $10^{-2}$ N/m (25 - 60 dyne/cm) gesteuert oder eingestellt wird.

5. Verfahren nach einem der vorangehenden Ansprüche, bei dem die die Oberflächenspannung der Flüssigkeit steuernde oder einstellende Verbindung mittels der gleichen Einrichtung, mit welcher die Flüssigkeit in das Gefäß eingespeist wird, in das Gefäß eingespeist wird.

6. Verfahren nach einem der vorangehenden Ansprüche, bei dem die Heizeinheit eine Wärmedichte von nicht weniger als 4,2 x $10^5$ J/$m^2$ (0,01 kcal/$cm^2$) liefert.

7. Verfahren nach einem der vorangehenden Ansprüche, bei dem die Einheit zum Detektieren oder Messen der Flüssigkeitsmenge im Gefäß ein Flüssigkeitsspiegel- oder-standsensor ist.

8. Verfahren nach Anspruch 7, bei dem die Einspeisung der Abfallflüssigkeit in das Verdampfungsgefäß beendet, wenn der Sensor einen Flüssigkeitsstand für eine eingestellte oder gegebene Zeit erfaßt, und eingeleitet wird, wenn der Sensor den Flüssigkeitsstand für eine eingestellte oder gegebene Zeit nicht erfaßt.

9. Verfahren nach Anspruch 8, wobei die eingestellte oder gegebene Zeit 1 s bis 10 min beträgt.

10. Verfahren nach Anspruch 9, wobei die eingestellte oder gegebene Zeit 1 s bis 1 min beträgt.

11. Verfahren nach einem der Ansprüche 7 bis 10, wobei der Sensor in einer Verbindungsrohrleitung außerhalb des Gefäßes vorgesehen ist.

FIG. 1

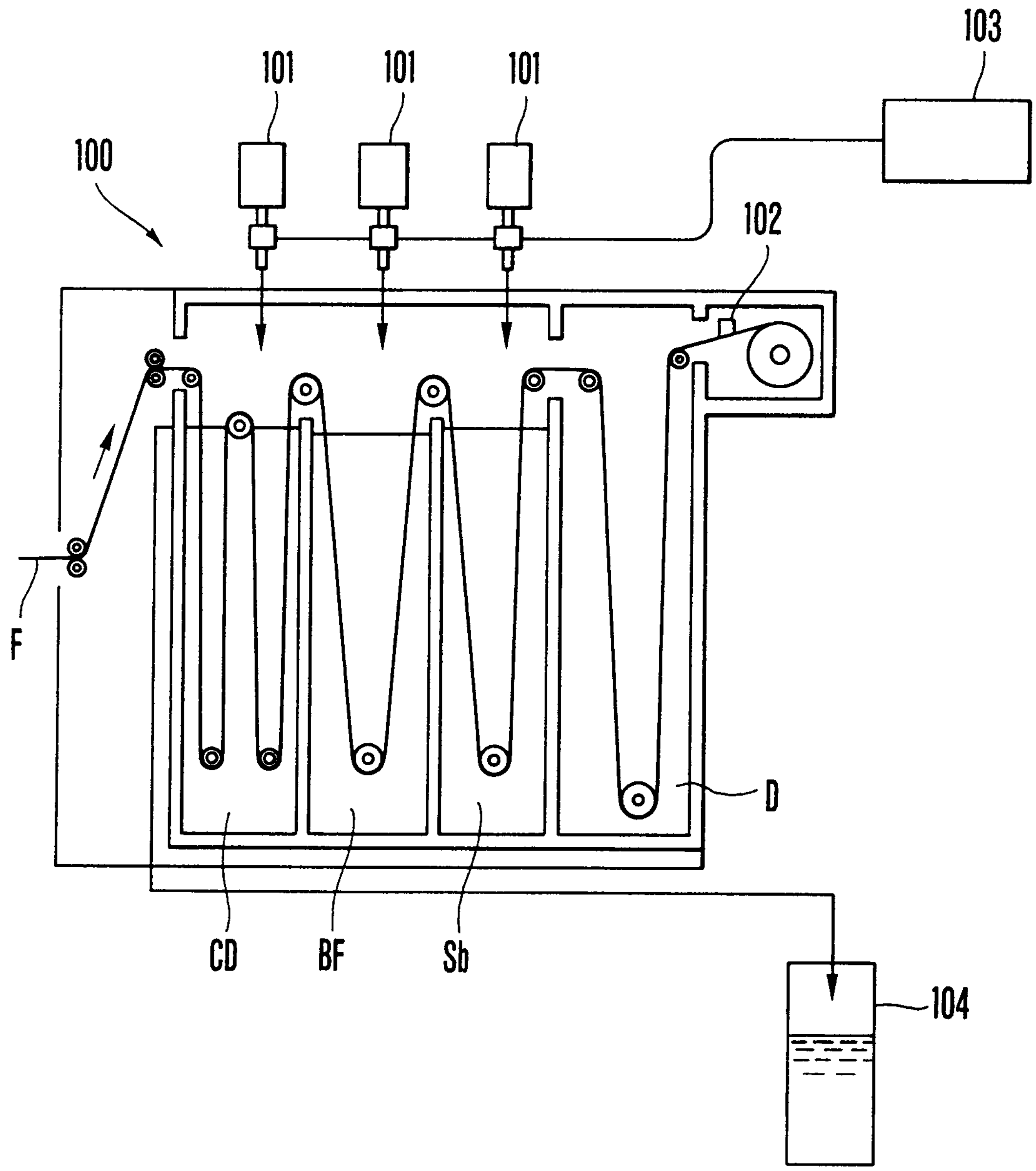

FIG.2

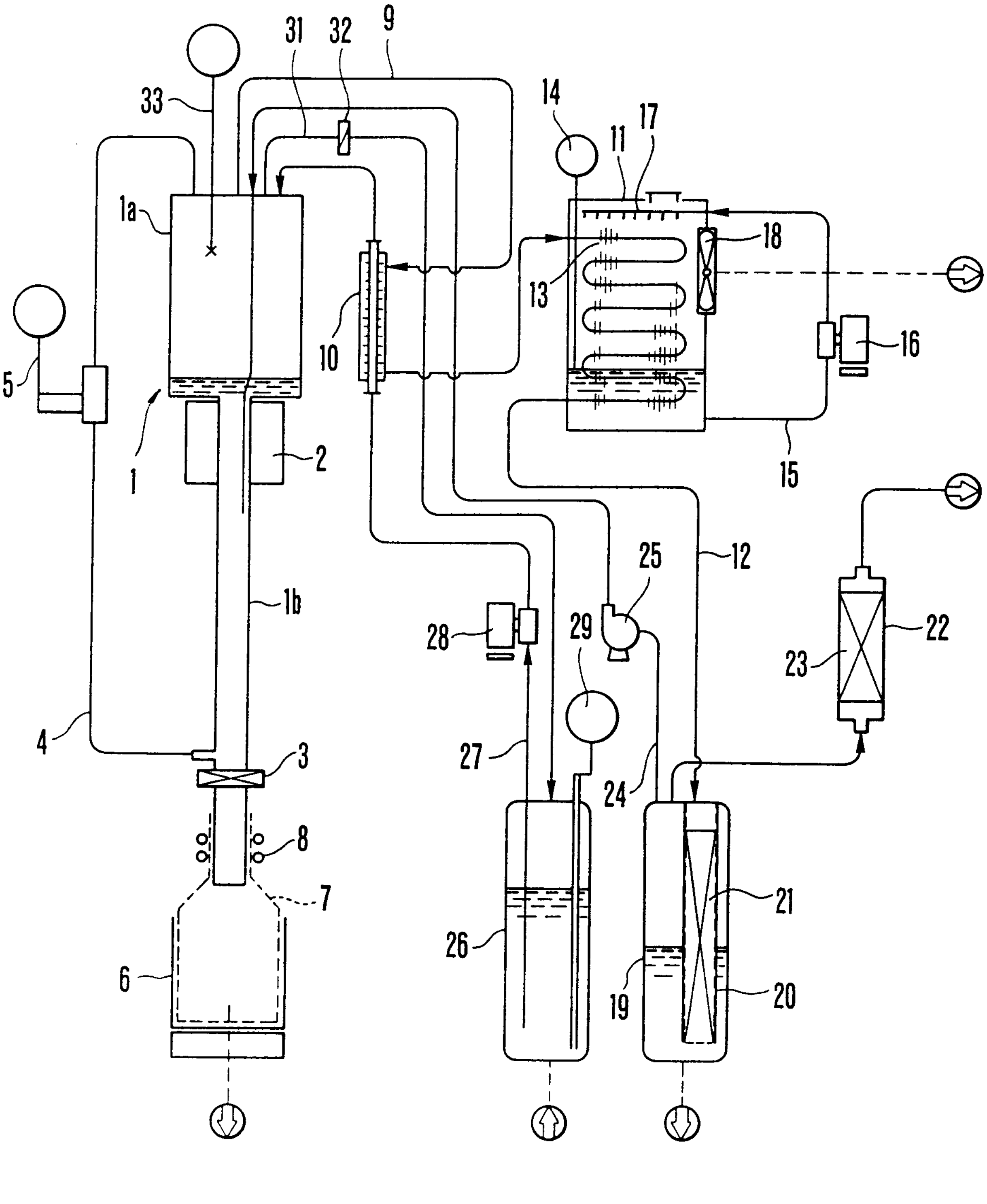
33
31
32
9
14
11
17
1a
18
13
16
10
5
1
2
15
12
25
1b
29
22
28
23
4
27
24
3
8
7
21
26
6
19
20

F I G.3

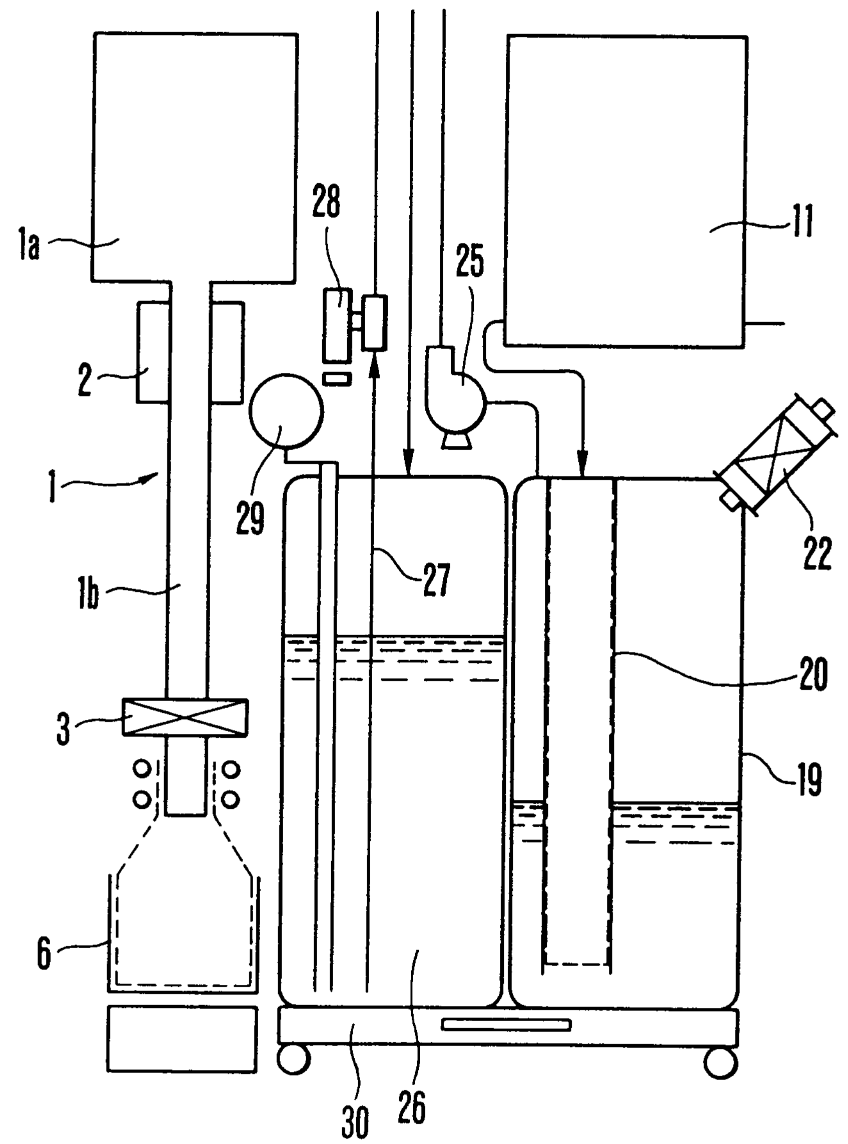

F I G.4

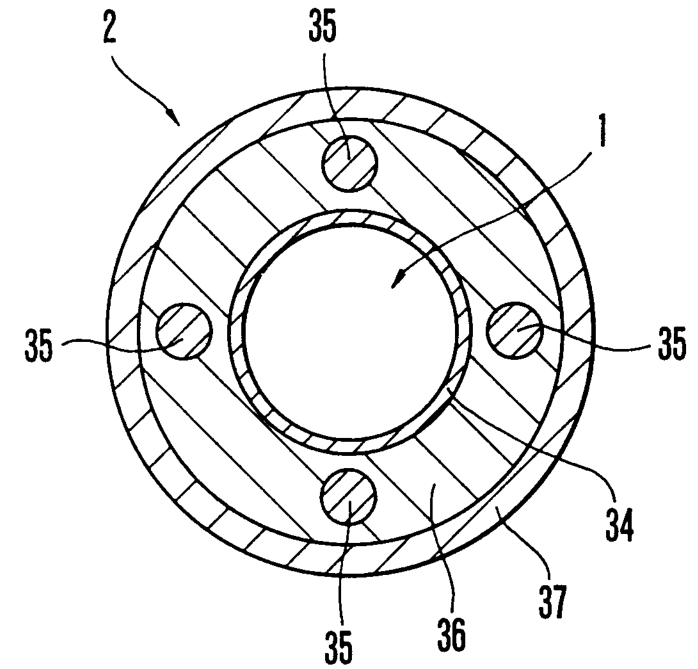


F I G.5

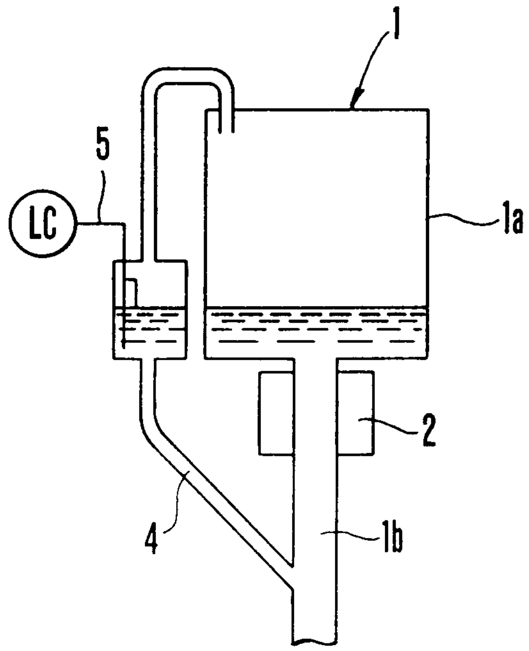


F I G.6

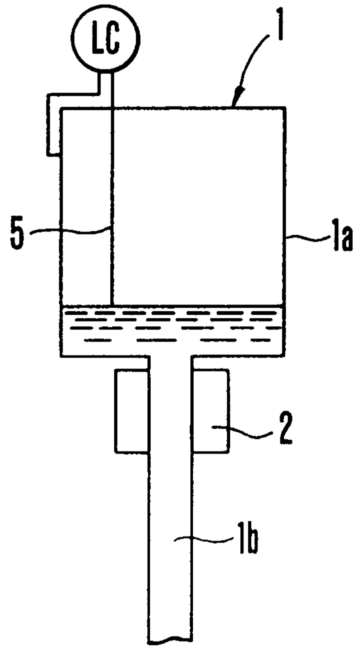

FIG.7

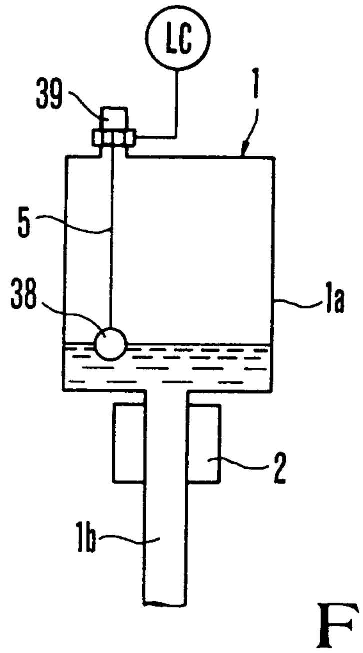


FIG.8

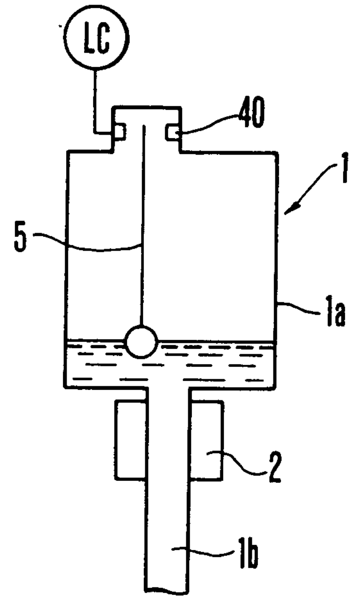


FIG.9

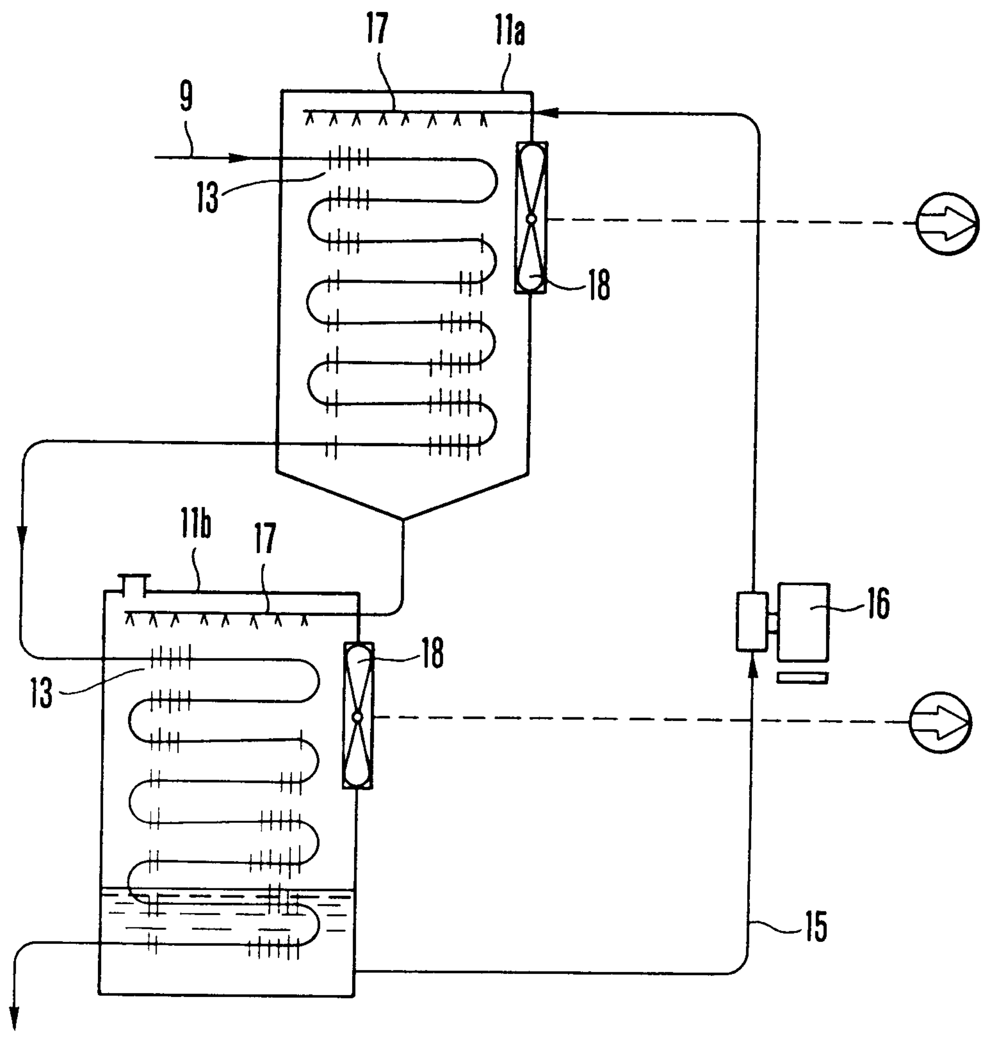

F I G.10

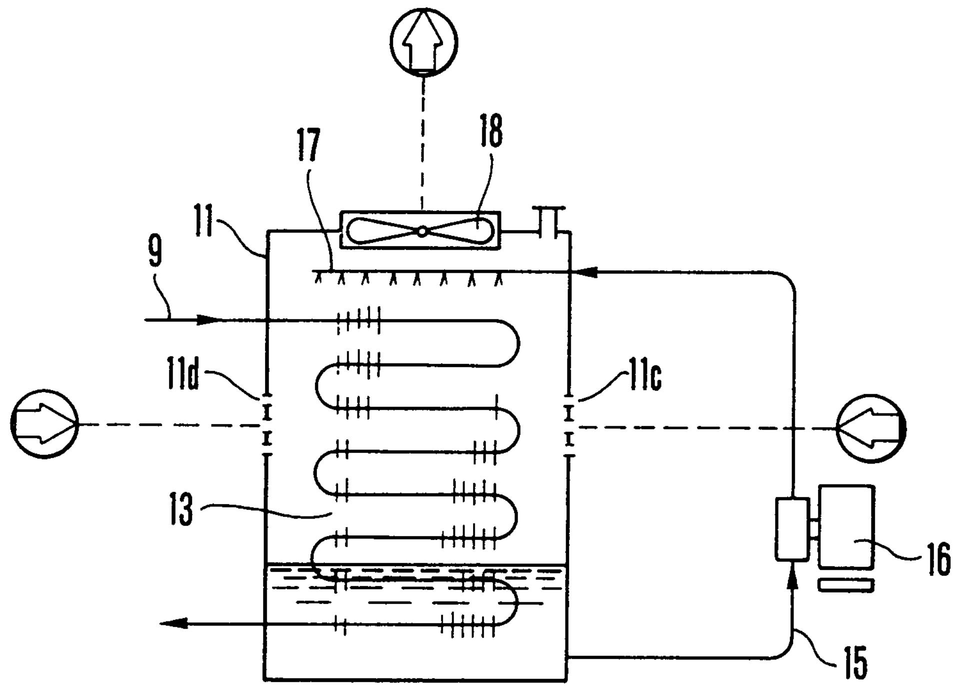


F I G.11